(19) Europäisches Patentamt
European Patent Office
Office européen des brevets

(11) **EP 4 661 310 A1**

(12) **EUROPEAN PATENT APPLICATION**
published in accordance with Art. 153(4) EPC

(43) Date of publication:
**10.12.2025 Bulletin 2025/50**

(21) Application number: **24756131.9**

(22) Date of filing: **05.02.2024**

(51) International Patent Classification (IPC):
*H04B 7/06* (2006.01)    *H04W 24/10* (2009.01)

(52) Cooperative Patent Classification (CPC):
**H04B 7/06; H04L 1/00; H04L 47/24; H04W 24/10**

(86) International application number:
**PCT/CN2024/076157**

(87) International publication number:
**WO 2024/169757 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.02.2023 CN 202310176651**

(71) Applicant: **Huawei Technologies Co., Ltd.**
**Shenzhen, Guangdong 518129 (CN)**

(72) Inventors:
• **CHAI, Xiaomeng**
**Shenzhen, Guangdong 518129 (CN)**
• **CHEN, Hongzhi**
**Shenzhen, Guangdong 518129 (CN)**
• **LI, Yuan**
**Shenzhen, Guangdong 518129 (CN)**
• **SUN, Yan**
**Shenzhen, Guangdong 518129 (CN)**
• **PANG, Jiyong**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND COMMUNICATION APPARATUS**

(57)  Embodiments of this application provide a communication method and a communication apparatus. The method includes: obtaining p groups to be transmitted on a first resource, where the p groups belong to N downlink channel state information (channel state information, CSI) reports, p is an integer greater than 1, and N is an integer greater than 1; and sending a part or all of the p groups on the first resource based on priorities of the p groups, where the priorities of the p groups are based on priorities of the N CSI reports, the priority of the CSI report is based on a type of the CSI report, and a type of at least one of the N CSI reports is an artificial intelligence (artificial intelligence, AI)-related type. Solutions in embodiments of this application can implement effective transmission of a CSI report, so that a network device can obtain desirable related information in a CSI report.

_500_

Terminal device                                                    Network device

510: Obtain p groups to be transmitted on a first resource, where the p groups belong to N CSI reports, p is an integer greater than 1, N is a positive integer, and a type of at least one of the N CSI reports is an AI-related type

520: Send a part or all of the p groups on the first resource based on priorities of the p groups, where the priorities of the p groups are based on priorities of the N CSI reports and/or priorities of the p groups in the N CSI reports

FIG. 5

EP 4 661 310 A1

## Description

This application claims priority to Chinese Patent Application No. 202310176651.5, filed with the China National Intellectual Property Administration on February 16, 2023 and entitled "COMMUNICATION METHOD AND COMMUNICATION APPARATUS", which is incorporated herein by reference in its entirety.

## TECHNICAL FIELD

Embodiments of this application relate to the communication field, and more specifically, to a communication method and a communication apparatus.

## BACKGROUND

In a communication system, a network device needs to determine, based on CSI parameters, downlink channel-related configuration information such as resources for scheduling downlink data channels of a terminal device, a modulation and coding scheme (modulation and coding scheme, MCS), and precoding. The terminal device calculate downlink CSI parameters by measuring downlink reference signals, and feeds back the downlink CSI parameters to the network device through CSI reports (report). CSI feedback modes include codebook-based CSI feedback, AI model-based CSI feedback, and the like. In some scenarios, a size of a CSI report to be transmitted may exceed a carrying capacity of a channel. For example, when multiple CSI reports need to be transmitted on a same resource, a size of the CSI reports to be transmitted may exceed a carrying capacity of a channel.

Therefore, how to perform CSI feedback to allow the network device to obtain the CSI report becomes an urgent problem to be resolved.

## SUMMARY

Embodiments of this application provide a communication method and a communication apparatus, to implement effective transmission of a CSI report, and to allow a network device to obtain desired related information in a CSI report.

According to a first aspect, a communication method is provided. The method may be performed by a terminal device, or may be performed by a chip or a circuit disposed in the terminal device. This is not limited in this application.

The method includes: obtaining p groups to be transmitted on a first resource, where the p groups belong to N channel state information CSI reports, p is an integer greater than 1, and N is an integer greater than 1; and sending a part or all of the p groups on the first resource based on priorities of the p groups, where the priorities of the p groups are based on priorities of the N CSI reports, the priority of the CSI report is based on a type of the CSI report, and a type of at least one of the N CSI reports is an AI-related type.

According to the solutions in this embodiment of this application, CSI reports to be transmitted on a same resource include an AI-related CSI report, and a priority of the CSI report is based on a type of the CSI report. The priorities of the p groups in the N CSI reports may be determined based on the priorities of the N CSI reports, so that the part or all of the p groups are sent based on the priorities of the p groups to be transmitted on a same resource. This helps appropriately use resources, so that a network device obtains needed information. For example, when the same resource cannot carry all of the p groups, a part of groups may be selected based on the priorities of the p groups for sending, and a higher-priority group is sent, and a lower-priority group is discarded, so that the network device can obtain channel information in the higher-priority group, for example, obtain channel information in an important group.

With reference to the first aspect, in some implementations of the first aspect, the priority of the CSI report is based on one or more parameters indicative of at least one of the following: a periodicity of the CSI report, a channel on which the CSI report is carried, whether the CSI report includes a layer 1-reference signal received power (layer 1-reference signal received power, L1-RSRP) or a layer 1-signal-to-interference-plus-noise ratio (L1-signal-to-interference-plus-noise ratio, L1-SINR), a serving cell to which the CSI report belongs, or an identity (identity, ID) of the CSI report, at least one of the one or more parameters further indicates the type of the CSI report, and the type of the CSI report includes the AI-related type or an AI-unrelated type.

For example, for a parameter, different values of the parameter may indicate different information.

With reference to the first aspect, in some implementations of the first aspect, the priority of the CSI report is based on one or more parameters, at least one of the one or more parameters indicates the type of the CSI report, the type of the CSI report includes the AI-related type or an AI-unrelated type, and another parameter in the one or more parameters indicates at least one of the following: a periodicity of the CSI report, a channel on which the CSI report is carried, whether the CSI report includes an L1-RSRP or an L1-SINR, a serving cell to which the CSI report belongs, or an ID of the CSI report.

For example, the at least one parameter indicating the type of CSI report may not indicate other information.

With reference to the first aspect, in some implementations of the first aspect, the AI-related type includes one or more of a first CSI report type, a second CSI report type, or a third CSI report type; and report content of the first CSI report type includes channel information obtained through inference by an AI model, report content of the second CSI report type includes performance information of the AI model, or report content of the third CSI report type includes channel information for implementing an operation related to the AI model.

With reference to the first aspect, in some implementations of the first aspect, the priority of the CSI report may alternatively be based on an AI model associated with the CSI report.

With reference to the first aspect, in some implementations of the first aspect, the N CSI reports include a first CSI report, a type of the first CSI report is the first CSI report type, the first CSI report includes p1 groups in the p groups, priorities of the p1 groups are based on a priority of the first CSI report and priorities of the p1 groups in the first CSI report, and p1 is an integer greater than 1.

For example, the N CSI reports further include a fourth CSI report, a type of the fourth CSI report is the first CSI report type, the fourth CSI report includes p1' groups in the p groups, and priorities of the p1' groups are based on a priority of the fourth CSI report and priorities of the p1' groups in the fourth CSI report. The priority of the fourth CSI report is lower than the priority of the first CSI report, and a priority of each group in the fourth CSI report is lower than a priority of a group, in the first CSI report, corresponding to the group in the fourth CSI report. p1'=p1. The p1 groups in the first CSI report include group p1-1 and group p1-2, and correspondingly, the p1' groups in the fourth CSI report include group p1'-1 and group p1'-2. A priority of group p1-1 is higher than a priority of group p1-2, a priority of group p1'-1 is higher than a priority of group p1'-2, the priority of group p1-1 is higher than the priority of group p1'-1, the priority of group p1'-1 is higher than the priority of group p1-2, and the priority of group p1-2 is higher than the priority of group p1'-2.

There is a correspondence between a group in the fourth CSI report and a group in the first CSI report. If a priority, in the fourth CSI report, of a group in the fourth CSI report is the same as a priority, in the first CSI report, of a group in the first CSI report, the two groups may be considered as groups having a correspondence.

In other words, for two CSI reports of the first CSI report type, during determining of priorities, priorities of groups are first considered, and then priorities of the CSI reports to which the groups having a correspondence belong are considered.

In this embodiment of this application, the first CSI report may be divided into multiple groups, so that information sending flexibility can be improved, to increase a probability that the network device obtains a group in the first CSI report. This helps the network device obtain partial information in the CSI report. For example, the first CSI report is divided into multiple groups, and the groups correspond to different priorities. When the first resource cannot carry the p groups, even if the whole first CSI report cannot be sent, a probability that the network device obtains a part of groups in the first CSI report can be increased. This helps the network device obtain partial information in the CSI report.

With reference to the first aspect, in some implementations of the first aspect, the channel information obtained through inference by the AI model includes channel information of multiple layers, the p1 groups each include channel information of at least one of the multiple layers, and the priorities of the p1 groups in the first CSI report match priorities of the channel information of the at least one layer in the p1 groups.

For example, priorities of channel information of layers are related to eigenvalues or singular values corresponding to eigenvectors of the layers. The priorities of the channel information of the layers are sorted in ascending order of the eigenvalues or the singular values corresponding to the eigenvectors of the layers, or the priorities of the channel information of the layers are sorted in descending order of the eigenvalues or the singular values corresponding to the eigenvectors of the layers. Beamforming gains of different layers may be different. Generally, a larger eigenvalue or singular value corresponding to a layer indicates a larger beamforming gain of the layer. Sparseness of eigenvectors of different layers may be different. Generally, a larger eigenvalue or singular value corresponding to a layer indicates stronger sparseness of an eigenvector of the layer, that is, higher feedback precision in the case of same feedback overheads.

In this embodiment of this application, priorities of the channel information obtained through AI inference may be classified based on layers, and a priority of channel information of a layer matches a priority of a group to which the layer belongs in the first CSI report. Beamforming gains of different layers may be different. Therefore, beamforming gains of different layers can be distinguished through priority classification based on layers. This helps implement priority classification based on different beamforming gains. For example, a layer with a larger beamforming gain may be used as a higher-priority layer, and the higher-priority layer belongs to a higher-priority group. In this way, it can be preferentially ensured that this part of CSI can be fed back. In other words, a probability that the network device obtains channel information of the layer with the larger beamforming gain is increased. In addition, sparseness of eigenvectors of different layers may be different, that is, feedback precision may be different. Therefore, feedback precision of different layers can be distinguished through priority classification based on layers. This helps implement priority classification based on different feedback precision. For example, a layer with higher feedback precision may be used as a higher-priority layer, and the higher-priority layer belongs to a higher-priority group. In this way, it can be preferentially ensured that this part of CSI can be fed back. In other words, a probability that the network device obtains channel information of the layer with the higher feedback precision is increased.

With reference to the first aspect, in some implementations of the first aspect, the channel information obtained through inference by the AI model includes channel information of multiple segments, the p1 groups each include channel information of at least one of the multiple segments, and the priorities of the p1 groups in the first CSI report match priorities of the channel information of the at least one segment in the p1 groups.

For example, a priority of channel information of a segment is related to whether CSI can be independently recovered based on the segment, and channel information of a segment based on which the CSI can be independently recovered has a highest priority.

In this embodiment of this application, priority classification is performed based on segments, so that a segment based on which CSI can be independently recovered has a higher priority, and the higher-priority segment belongs to a higher-priority group. In this way, it can be preferentially ensured that this part of CSI can be fed back. In other words, a probability that the network device obtains the segment based on which the CSI can be independently recovered is increased. This helps the network device recover the CSI. In this way, even if the whole first CSI report cannot be sent, a probability that the network device obtains a higher-priority group can be increased. Even if a segment with a low priority is discarded, the network device can still recover the CSI based on a remaining segment with a high priority.

With reference to the first aspect, in some implementations of the first aspect, the priority of the at least one segment is related to a layer at which the at least one segment is located and a location of the at least one segment at the layer at which the at least one segment is located.

The channel information obtained through inference by the AI model may include channel information of multiple layers. Channel information of a part or all of the multiple layers is segmented, to obtain the channel information of the multiple segments. A priority of a segment is related to a layer at which the segment is located and a location of the segment at the layer at which the segment is located. The location of the segment at the layer at which the segment is located may be understood as a segment at the layer. For example, the location of the segment at the layer at which the segment is located may be indicated by an index of the segment at the layer at which the segment is located. The layer at which the segment is located may be indicated by an index of the layer at which the segment is located. For example, a priority of an $i^{th}$ segment at a $j^{th}$ layer is related to values of i and j, where i indicates an index of the segment at the layer at which the segment is located, and j indicates an index of the layer at which the segment is located.

With reference to the first aspect, in some implementations of the first aspect, the N CSI reports include a second CSI report, a type of the second CSI report is the second CSI report type, the second CSI report includes p2 groups in the p groups, priorities of the p2 groups are based on a priority of the second CSI report and priorities of the p2 groups in the second CSI report, and p2 is an integer greater than 1.

For example, the N CSI reports further include a fifth CSI report, a type of the fifth CSI report is the second CSI report type, the fifth CSI report includes p2' groups in the p groups, and priorities of the p2' groups are based on a priority of the fifth CSI report and priorities of the p2' groups in the fifth CSI report. The priority of the fifth CSI report is lower than the priority of the second CSI report, and a priority of each group in the fifth CSI report is lower than a priority of a group, in the second CSI report, corresponding to the group in the fifth CSI report. p2'=p2. The p2 groups in the second CSI report include group p2-1 and group p2-2, and correspondingly, the p2' groups in the fifth CSI report include group p2'-1 and group p2'-2. A priority of group p2-1 is higher than a priority of group p2-2, a priority of group p2'-1 is higher than a priority of group p2'-2, the priority of group p2-1 is higher than the priority of group p2'-1, the priority of group p2'-1 is higher than the priority of group p2-2, and the priority of group p2-2 is higher than the priority of group p2'-2.

There is a correspondence between a group in the fifth CSI report and a group in the second CSI report. If a priority, in the fifth CSI report, of a group in the fifth CSI report is the same as a priority, in the second CSI report, of a group in the second CSI report, the two groups may be considered as groups having a correspondence.

In other words, for two CSI reports of the second CSI report type, during determining of priorities, priorities of groups are first considered, and then priorities of the CSI reports to which the groups having a correspondence belong are considered.

In this embodiment of this application, the second CSI report may be divided into multiple groups, so that information sending flexibility can be improved, to increase a probability that the network device obtains a group in the second CSI report. This helps the network device obtain partial information in the CSI report. For example, the second CSI report is divided into multiple groups, and the groups correspond to different priorities. When the first resource cannot carry the p groups, even if the whole second CSI report cannot be sent, a probability that the network device obtains a part of groups in the second CSI report can be increased. This helps the network device obtain partial information in the CSI report.

With reference to the first aspect, in some implementations of the first aspect, the performance information of the AI model includes overall performance information, performance information of the multiple layers, or performance information of multiple subbands, the p2 groups each include at least one piece of performance information in the performance information of the AI model, and the priorities of the p2 groups in the second CSI report match priorities of the at least one piece of performance information in the p2 groups.

For example, the overall performance information of the AI model may be overall accuracy of recovered CSI information. The overall accuracy of the recovered CSI information may be determined based on accuracy that is of each layer and/or each subband and that is in the recovered CSI information. For example, the overall accuracy of the recovered CSI information may be represented as an average value of SGCSs between recovered information of each layer and/or each subband and raw information of each layer and/or each subband.

With reference to the first aspect, in some implementations of the first aspect, a priority of the overall performance information is higher than priorities of the performance information of the multiple layers, or the priority of the overall performance information is higher than priorities of the performance information of the multiple subbands.

In this embodiment of this application, the priority of the overall performance information may be higher than a priority of other performance information. This helps increase a probability that the network device obtains the overall performance information, so that overall performance of the AI model can be determined, to implement subsequent configuration.

With reference to the first aspect, in some implementations of the first aspect, a third CSI report in the N CSI reports includes one of the p groups.

The third CSI report may be any one of the N CSI reports.

In other words, in the p groups, a part of CSI reports include only one group.

For example, the CSI reports may not be divided into multiple groups, that is, the CSI reports as a whole may be considered as one group.

According to the solutions in this embodiment of this application, for some information having a high integrity requirement, if a part of the information is discarded, subsequent configuration may be affected. The information having the high integrity requirement may be used as one of the p groups. In this way, all of the information having the high integrity requirement may be discarded or uploaded.

With reference to the first aspect, in some implementations of the first aspect, p=N.

In other words, the CSI reports each include one of the p groups.

For example, none of the N CSI reports is divided into multiple groups, that is, each of the N CSI reports may be considered as a whole as a group. The priorities of the p groups are based on the priorities of the N CSI reports.

According to the solutions in this embodiment of this application, for some information having a high integrity requirement, if a part of the information is discarded, subsequent configuration may be affected. If information having a high integrity requirement exists in each of the N CSI reports, the information having the high integrity requirement in each CSI report may be separately used as one of the p groups. In this way, all of the information having the high integrity requirement may be discarded or uploaded.

With reference to the first aspect, in some implementations of the first aspect, at least two of the N CSI reports have a same priority.

For example, the priority setting manner may be applied to a scenario in which multiple CSI reports need to be used together. For multiple CSI reports with a same priority, when the multiple CSI reports need to be discarded, the multiple CSI reports may be discarded simultaneously, or a part of groups with a same priority are discarded based on priorities in the multiple CSI reports.

With reference to the first aspect, in some implementations of the first aspect, the method further includes: receiving first indication information from a network device, where the first indication information indicates priorities of a part or all of the N CSI reports.

With reference to the first aspect, in some implementations of the first aspect, the first indication information is carried in one or more of radio resource control (radio resource control, RRC) signaling, a medium access control control element (medium access control element, MAC CE), or downlink control information (downlink control information, DCI).

With reference to the first aspect, in some implementations of the first aspect, the sending the part or all of the p groups on the first resource based on the priorities of the p groups may include: selecting a part of groups from the p groups based on the priorities of the p groups, and sending the part of groups on the first resource.

With reference to the first aspect, in some implementations of the first aspect, the sending the part or all of the p groups on the first resource based on the priorities of the p groups may include: determining locations of the part or all of the p groups on the first resource based on the priorities of the p groups, and sending the part or all of the p groups on the first resource.

According to a second aspect, a communication method is provided. The method may be performed by a terminal device, or may be performed by a chip or a circuit disposed in the terminal device. This is not limited in this application.

The method includes: obtaining p groups of a CSI report to be transmitted on a first resource, where p is an integer greater than 1; and sending a part or all of the p groups on the first resource based on priorities of the p groups in the CSI report, where a type of the CSI report is an AI-related type.

According to the solutions in this embodiment of this application, the AI-related CSI report may be internally divided into the multiple groups, and the part or all of the p groups are sent based on the priorities of the p groups, to help appropriately use resources, so that a network device obtains needed information. For example, when the same resource cannot carry all of the p groups, a part of groups may be selected based on the priorities of the p groups for sending, and a higher-priority group is sent, and a lower-priority group is discarded, so that the network device can obtain channel information in the higher-priority group, for example, obtain channel information in an important group. In this way, information sending flexibility can be improved, and even if the whole AI-related CSI report cannot be sent, a probability that the network device obtains a part of groups can be increased, so that the network device obtains partial information in the CSI report.

With reference to the second aspect, in some implementations of the second aspect, the AI-related type includes one or more of a first CSI report type, a second CSI report type, or a third CSI report type; and report content of the first CSI report type includes channel information obtained through inference by an AI model, report content of the second CSI report type includes performance information of the AI model, or report content of the third CSI report type includes channel information for implementing an operation related to the AI model.

With reference to the second aspect, in some implementations of the second aspect, the type of the CSI report is the first CSI report type, the channel information obtained through inference by the AI model includes channel information of multiple layers, the p groups each include channel information of at least one of the multiple layers, and the priorities of the p groups in the CSI report match priorities of the channel information of the at least one layer in the p groups.

With reference to the second aspect, in some implementations of the second aspect, the channel information obtained through inference by the AI model includes channel information of multiple segments, the p groups each include channel information of at least one of the multiple segments, and the priorities of the p groups in the CSI report match priorities of the channel information of the at least one segment in the p groups.

With reference to the second aspect, in some implementations of the second aspect, the priority of the at least one segment is related to a layer at which the at least one segment is located and a location of the at least one segment at the layer at which the at least one segment is located.

With reference to the second aspect, in some implementations of the second aspect, the type of the CSI report is the second CSI report type, the performance information of the AI model includes overall performance information, performance information of the multiple layers, or performance information of multiple subbands, the p groups each include at least one piece of performance information in the performance information of the AI model, and the priorities of the p groups in the CSI report match priorities of the at least one piece of performance information in the p groups.

With reference to the second aspect, in some implementations of the second aspect, a priority of the overall performance information is higher than priorities of the performance information of the multiple layers, or the priority of the overall performance information is higher than priorities of the performance information of the multiple subbands.

According to a third aspect, a communication method is provided. The method may be performed by a network device, or may be performed by a chip or a circuit disposed in the network device. This is not limited in this application.

The method includes: receiving q groups on a first resource, where the q groups are a part or all of p groups, the p groups belong to N CSI reports, q is a positive integer, p is an integer greater than 1, N is an integer greater than 1, priorities of the p groups are based on priorities of the N CSI reports, the priority of the CSI report is based on a type of the CSI report, and a type of at least one of the N CSI reports is an AI-related type; and communicating with a terminal device based on the q groups.

With reference to the third aspect, in some implementations of the third aspect, the priority of the CSI report is based on one or more parameters indicative of at least one of the following: a periodicity of the CSI report, a channel on which the CSI report is carried, whether the CSI report includes a layer 1-reference signal received power L1-RSRP or a layer 1-signal-to-interference-plus-noise ratio L1-SINR, a serving cell to which the CSI report belongs, or an identity ID of the CSI report, at least one of the one or more parameters further indicates the type of the CSI report, and the type of the CSI report includes the AI-related type or an AI-unrelated type.

With reference to the third aspect, in some implementations of the third aspect, the priority of the CSI report is based on one or more parameters, at least one of the one or more parameters indicates the type of the CSI report, the type of the CSI report includes the AI-related type or an AI-unrelated type, and another parameter in the one or more parameters indicates at least one of the following: a periodicity of the CSI report, a channel on which the CSI report is carried, whether the CSI report includes an L1-RSRP or an L1-SINR, a serving cell to which the CSI report belongs, or an ID of the CSI report.

With reference to the third aspect, in some implementations of the third aspect, the AI-related type includes one or more of a first CSI report type, a second CSI report type, or a third CSI report type; and report content of the first CSI report type includes channel information obtained through inference by an AI model, report content of the second CSI report type includes performance information of the AI model, or report content of the third CSI report type includes channel information for implementing an operation related to the AI model.

With reference to the third aspect, in some implementations of the third aspect, the N CSI reports include a first CSI report, a type of the first CSI report is the first CSI report type, the first CSI report includes p1 groups in the p groups, priorities of the p1 groups are based on a priority of the first CSI report and priorities of the p1 groups in the first CSI report, and p1 is an integer greater than 1.

With reference to the third aspect, in some implementations of the third aspect, the channel information obtained through inference by the AI model includes channel information of multiple layers, the p1 groups each include channel information of at least one of the multiple layers, and the priorities of the p1 groups in the first CSI report match priorities of the channel information of the at least one layer in the p1 groups.

With reference to the third aspect, in some implementations of the third aspect, the channel information obtained through inference by the AI model includes channel information of multiple segments, the p1 groups each include channel information of at least one of the multiple segments, and the priorities of the p1 groups in the first CSI report match priorities of the channel information of the at least one segment in the p1 groups.

With reference to the third aspect, in some implementations of the third aspect, the priority of the at least one segment is related to a layer at which the at least one segment is located and a location of the at least one segment at the layer at which the at least one segment is located.

With reference to the third aspect, in some implementations of the third aspect, the N CSI reports include a second CSI report, a type of the second CSI report is the second CSI report type, the second CSI report includes p2 groups in the p groups, priorities of the p2 groups are based on a priority of the second CSI report and priorities of the p2 groups in the second CSI report, and p2 is an integer greater than 1.

With reference to the third aspect, in some implementations of the third aspect, the performance information of the AI model includes overall performance information, performance information of the multiple layers, or performance information of multiple subbands, the p2 groups each include at least one piece of performance information in the performance information of the AI model, and the priorities of the p2 groups in the second CSI report match priorities of the at least one piece of performance information in the p2 groups.

With reference to the third aspect, in some implementations of the third aspect, a priority of the overall performance information is higher than priorities of the performance information of the multiple layers, or the priority of the overall performance information is higher than priorities of the performance information of the multiple subbands.

With reference to the third aspect, in some implementations of the third aspect, p=N.

With reference to the third aspect, in some implementations of the third aspect, at least two of the N CSI reports have a same priority.

With reference to the third aspect, in some implementations of the third aspect, the method further includes: sending first indication information indicative of priorities of a part or all of the N CSI reports.

According to a fourth aspect, a communication method is provided. The method may be performed by a network device, or may be performed by a chip or a circuit disposed in the network device. This is not limited in this application.

The method includes: sending first indication information indicative of priorities of a part or all of N CSI reports, N is an integer greater than 1, and a type of at least one of the N CSI reports is an AI-related type; and receiving a part or all of p groups on a first resource, where the part or all of the p groups are based on priorities of the p groups, the p groups belong to the N CSI reports, the priorities of the p groups are based on priorities of the N CSI reports, and p is an integer greater than 1.

With reference to the fourth aspect, in some implementations of the fourth aspect, the first indication information is carried in one or more of RRC signaling, a MAC CE, or DCI.

With reference to the fourth aspect, in some implementations of the fourth aspect, at least two of the N CSI reports have a same priority.

With reference to the fourth aspect, in some implementations of the fourth aspect, the priority of the CSI report is based on a type of the CSI report, and the type of the CSI report includes the AI-related type or an AI-unrelated type.

With reference to the fourth aspect, in some implementations of the fourth aspect, the AI-related type includes one or more of a first CSI report type, a second CSI report type, or a third CSI report type; and report content of the first CSI report type includes channel information obtained through inference by an AI model, report content of the second CSI report type includes performance information of the AI model, or report content of the third CSI report type includes channel information for implementing an operation related to the AI model.

It should be understood that extensions, limitations, explanations, and descriptions of related content in the first aspect are also applicable to same content in the second aspect, the third aspect, and the fourth aspect.

According to a fifth aspect, a communication apparatus is provided. The communication apparatus may be a terminal device, or may be an apparatus, a module, a circuit, a chip, or the like disposed in the terminal device, or may be an apparatus that can be used together with the terminal device. In a design, the communication apparatus may include modules that are in one-to-one correspondence with the methods/operations/steps/actions described in the first aspect or the second aspect. The module may be implemented by a hardware circuit, software, or a combination of the hardware circuit and the software. In a design, the communication apparatus may include a processing module and a communication module.

A sending module is configured to perform a sending action in the method described in the first aspect, and the processing module is configured to perform a processing-related action in the method described in the first aspect. Alternatively, the sending module is configured to perform a sending action in the method described in the second aspect, and the processing module is configured to perform a processing-related action in the method described in the second aspect.

According to a sixth aspect, a communication apparatus is provided. The communication apparatus may be a network device, or may be an apparatus, a module, a circuit, a chip, or the like disposed in the network device, or may be an apparatus that can be used together with the network device. In a design, the communication apparatus may include modules that are in one-to-one correspondence with the methods/operations/steps/actions described in the third aspect or the fourth aspect. The module may be implemented by a hardware circuit, software, or a combination of the hardware circuit and the software. In a design, the communication apparatus may include a processing module and a communication module.

A receiving module is configured to perform a receiving action in the method described in the third aspect or the fourth aspect, the sending module is configured to perform a sending action in the method described in the third aspect or the fourth aspect, and the processing module is configured to perform a processing-related action in the method described in the third aspect or the fourth aspect.

According to a seventh aspect, a communication apparatus is provided. The communication apparatus includes a processor and a storage medium. The storage medium stores instructions. When the instructions are run by the processor, the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, or the method according to any one of the fourth aspect or the possible implementations of the fourth aspect is implemented.

According to an eighth aspect, a communication apparatus is provided. The communication apparatus includes a processor. The processor is configured to process data and/or information, so that the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, or the method according to any one of the fourth aspect or the possible implementations of the fourth aspect is implemented. Optionally, the communication apparatus may further include a communication interface. The communication interface is configured to receive data and/or information, and transmit the received data and/or information to the processor. Optionally, the communication interface is further configured to output data and/or information processed by the processor.

According to a ninth aspect, a chip is provided. The chip includes a processor. The processor is configured to run a program or instructions, to implement the method according to any one of the first aspect or the possible implementations of the first aspect, the method according to any one of the second aspect or the possible implementations of the second aspect, the method according to any one of the third aspect or the possible implementations of the third aspect, or the method according to any one of the fourth aspect or the possible implementations of the fourth aspect. Optionally, the chip may further include a memory, and the memory is configured to store the program or the instructions. Optionally, the chip may further include an input/output circuit or an interface.

According to a tenth aspect, a computer-readable storage medium is provided. The computer-readable storage medium includes instructions, and when the instructions are run by a processor, the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, or the method according to any one of the fourth aspect or the possible implementations of the fourth aspect is implemented.

According to an eleventh aspect, a computer program product is provided. The computer program product includes computer program code or instructions, and when the computer program code or the instructions are run, the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, or the method according to any one of the fourth aspect or the possible implementations of the fourth aspect is implemented.

According to a twelfth aspect, a communication system is provided. The communication system includes one or a combination of the following apparatuses: a communication apparatus performing any one of the first aspect or the possible implementations of the first aspect, a communication apparatus performing any one of the second aspect or the possible implementations of the second aspect, a communication apparatus performing any one of the third aspect or the possible implementations of the third aspect, or a communication apparatus performing any one of the fourth aspect or the possible implementations of the fourth aspect.

## BRIEF DESCRIPTION OF DRAWINGS

FIG. 1 is a diagram of a communication system to which an embodiment of this application is applicable;

FIG. 2 is a diagram of another communication system to which an embodiment of this application is applicable;

FIG. 3 is a block diagram of an auto-encoder;

FIG. 4 is a diagram of an AI application framework;

FIG. 5 is a schematic flowchart of a communication method according to an embodiment of this application;

FIG. 6 is a diagram of a manner of determining a priority of a segment according to an embodiment of this application;

FIG. 7 is a diagram of another manner of determining a priority of a segment according to an embodiment of this application;

FIG. 8 is a diagram of a report format of a CSI report according to an embodiment of this application;

FIG. 9 is a diagram of report formats of multiple CSI reports according to an embodiment of this application;

FIG. 10 is another diagram of report formats of multiple CSI reports according to an embodiment of this application;

FIG. 11 is still another diagram of report formats of multiple CSI reports according to an embodiment of this application;

FIG. 12 is yet another diagram of report format of multiple CSI reports according to an embodiment of this application;

FIG. 13 is a block diagram of a communication apparatus according to an embodiment of this application; and

FIG. 14 is a block diagram of another communication apparatus according to an embodiment of this application.

## DESCRIPTION OF EMBODIMENTS

The following describes technical solutions of this application with reference to the accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system like a 6th generation (6th generation, 6G) mobile communication system, or a converged system of multiple systems. The technical solutions provided in this application may be further applied to device to device (device to device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system.

A network element in a communication system may send a signal to another network element or receive a signal from another network element. The signal may include information, signaling, data, or the like. The network element may alternatively be replaced with an entity, a network entity, a device, a communication device, a communication module, a node, a communication node, or the like. In the present disclosure, the network element is used as an example for description. For example, the communication system may include at least one terminal device and at least one network device. The network device may send a downlink signal to the terminal device, and/or the terminal device may send an uplink signal to the network device. It may be understood that the terminal device in the present disclosure may be replaced with a first network element, the network device may be replaced with a second network element, and the terminal device and the network device perform a corresponding communication method in the present disclosure.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device having a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device or wearable device connected to a wireless modem, a terminal device in a 5G network, a terminal device in a future evolved public land mobile network (public land mobile network, PLMN), or the like. This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, an apparatus configured to implement a function of the terminal device may be a terminal device, or may be an apparatus that can support the terminal device in implementing the function, for example, a chip system. The apparatus may be installed in the terminal device or used together with the terminal device. In this embodiment of this application, the chip system may include a chip, or may include a chip and another discrete component. In embodiments of this application, that the apparatus for implementing the function of the terminal device is a terminal device is only used as an example for description, but does not constitute any limitation on the solutions in embodiments of this application.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following various names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used for the network device are not limited in embodiments of this application.

The base station may be fixed or mobile. For example, a helicopter or an uncrewed aerial vehicle may be configured as a mobile base station, and one or more cells may move based on a location of the mobile base station. In another example, a helicopter or an uncrewed aerial vehicle may be configured as a device for communicating with another base station.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In embodiments of this application, an apparatus for implementing a function of the network device may be a network device, or may be an apparatus that can support the network device in implementing the function, for example, a chip system, a hardware circuit, a software module, or a combination of a hardware circuit and a software module. The apparatus may be mounted in the network device or used together with the network device. In embodiments of this application, that the apparatus for implementing the function of the network device is a network device is only used as an example for description, but does not constitute any limitation on the solutions in embodiments of this application.

The network device and/or the terminal device may be deployed on land, including an indoor device, an outdoor device, a handheld device, or a vehicle-mounted device; may be deployed on water; or may be deployed on an airplane, a balloon, or a satellite in the air. A scenario that the network device and the terminal device are in is not limited in embodiments of this application. In addition, each of the terminal device and the network device may be a hardware device, a software function running on dedicated hardware, a software function running on general-purpose hardware, for example, a virtualization function instantiated on a platform (for example, a cloud platform), or an entity including a dedicated or general-purpose hardware device and a software function. Specific forms of the terminal device and the network device are not limited in this application.

In a wireless communication network, for example, in a mobile communication network, services supported by the network are increasingly diversified, and therefore requirements that need to be satisfied are increasingly diversified. For example, the network needs to be capable of supporting an ultra-high rate, an ultra-low latency, and/or massive connections. This feature makes network planning, network configuration, and/or resource scheduling increasingly complex. In addition, because the network has increasingly powerful functions, for example, supporting an increasingly high spectrum and supporting new technologies such as a higher-order multiple input multiple output (multiple input multiple output, MIMO) technology, beamforming, and/or beam management, network energy saving becomes a hot research topic. These new requirements, scenarios, and features cause unprecedented challenges to network planning, operation and maintenance, and efficient operation. To address the challenges, an artificial intelligence technology may be introduced into the wireless communication network to implement network intelligence.

To support the AI technology in a wireless network, an AI node may be further introduced into the network.

Optionally, the AI node may be deployed at one or more of the following positions in the communication system: an access network device, a terminal device, a core network device, or the like. Alternatively, the AI node may be independently deployed, for example, deployed at a position other than any one of the foregoing devices, for example, a host or a cloud server of an over the top (OTT, over the top) system. The AI node may communicate with another device in the communication system. The another device may be, for example, one or more of the following: a network device, a terminal device, a network element of a core network, or the like.

It may be understood that a quantity of AI nodes is not limited in this application. For example, when there are multiple AI nodes, the multiple AI nodes may be divided based on functions. For example, different AI nodes are responsible for different functions.

It may be further understood that the AI nodes may be independent devices, or may be integrated into a same device to implement the different functions, or may be network elements in a hardware device, or may be software functions running on dedicated hardware, or may be virtualization functions instantiated on a platform (for example, a cloud platform). Specific forms of the AI nodes are not limited in this application.

The AI node may be an AI network element or an AI module.

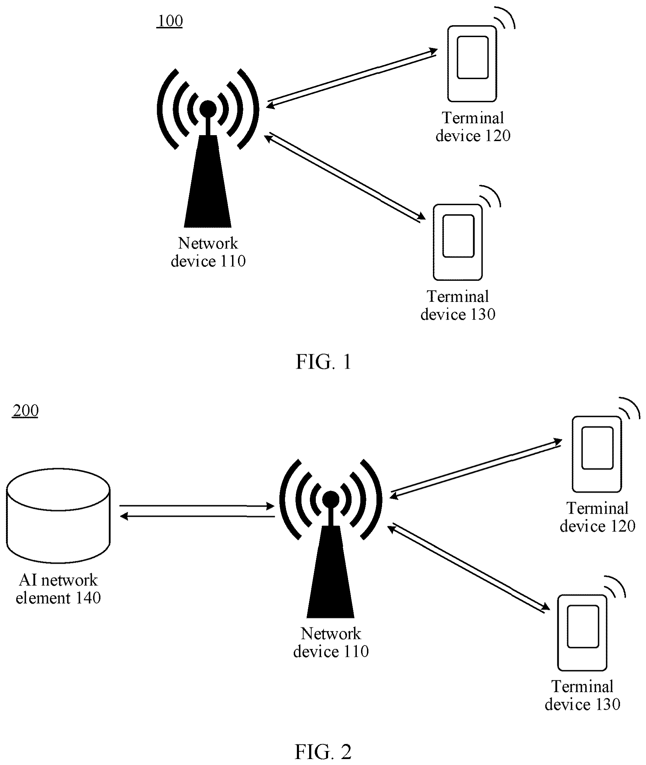

FIG. 1 is a diagram of a communication system to which a communication method according to an embodiment of this application is applicable. As shown in FIG. 1, the communication system 100 may include at least one network device, for example, a network device 110 shown in FIG. 1. The communication system 100 may further include at least one terminal device, for example, a terminal device 120 and a terminal device 130 shown in FIG. 1. The network device 110 may communicate with the terminal device (for example, the terminal device 120 and the terminal device 130) through a radio link. Communication devices, for example, the network device 110 and the terminal device 120, in the communication system may communicate with each other by using a multiple-antenna technology.

FIG. 2 is a diagram of another communication system to which a communication method according to an embodiment of this application is applicable. Compared with the communication system 100 shown in FIG. 1, the communication system 200 shown in FIG. 2 further includes an AI network element 140. The AI network element 140 is configured to perform an AI-related operation, for example, constructing a training dataset or training an AI model.

In a possible implementation, the network device 110 may send data related to training of the AI model to the AI network element 140, and the AI network element 140 constructs a training dataset and trains the AI model. For example, the data related to training of the AI model may include data reported by the terminal device. The AI network element 140 may send a result of an operation related to the AI model to the network device 110, and the network device 110 forwards the result to the terminal device. For example, the result of the operation related to the AI model may include at least one of the following: a trained AI model, an evaluation result or a test result for the model, or the like. For example, a part of the trained AI model may be deployed on the network device 110, and the other part is deployed on the terminal device. Alternatively, the trained AI model may be deployed on the network device 110. Alternatively, the trained AI model may be deployed on the terminal device.

It should be understood that, in FIG. 2, that the AI network element 140 is directly connected to the network device 110 is only used an example for description. In another scenario, the AI network element 140 may alternatively be connected to the terminal device. Alternatively, the AI network element 140 may be connected to both the network device 110 and the terminal device. Alternatively, the AI network element 140 may be connected to the network device 110 via a third-party network element. A connection relationship between the AI network element and another network element is not limited in embodiments of this application.

The AI network element 140 may alternatively be disposed in a network device and/or a terminal device as a module, for example, disposed in the network device 110 or the terminal device shown in FIG. 1.

It should be noted that FIG. 1 and FIG. 2 are merely simplified diagrams of examples for ease of understanding. For example, the communication system may further include another device, for example, may further include a wireless relay device and/or a wireless backhaul device, which are/is not shown in FIG. 1 and FIG. 2. During actual application, the communication system may include multiple network devices, and may also include multiple terminal devices. Quantities of network devices and terminal devices included in the communication system are not limited in embodiments of this application.

For ease of understanding solutions in embodiments of this application, the following describes terms that may be used in embodiments of this application.

(1) AI model:

The AI model is an algorithm or a computer program that can implement an AI function. The AI model represents a mapping relationship between an input and an output of the model. A type of the AI model may be a neural network, a linear regression model, a decision tree model, a support vector machine (support vector machine, SVM), a Bayesian network, a Q-learning model, or another machine learning (machine learning, ML) model.

(2) Two-sided model:

The two-sided model may also be referred to as a bilateral model, a cooperative model, a dual model, a two-sided (two-sided) model, or the like. The two-sided model is a model including multiple submodels. The multiple submodels included in the model need to match each other. The multiple submodels may be deployed on different nodes.

Embodiments of this application relate to an encoder for compressing CSI and a decoder for recovering compressed CSI. The encoder and the decoder are used together. It may be understood that the encoder and the decoder are AI models that match each other. One encoder may include one or more AI models, and a decoder matching the encoder also includes one or more AI models. An encoder and a decoder that are used together include a same quantity of AI models, and AI models included in the encoder are in one-to-one correspondence with AI models included in the decoder.

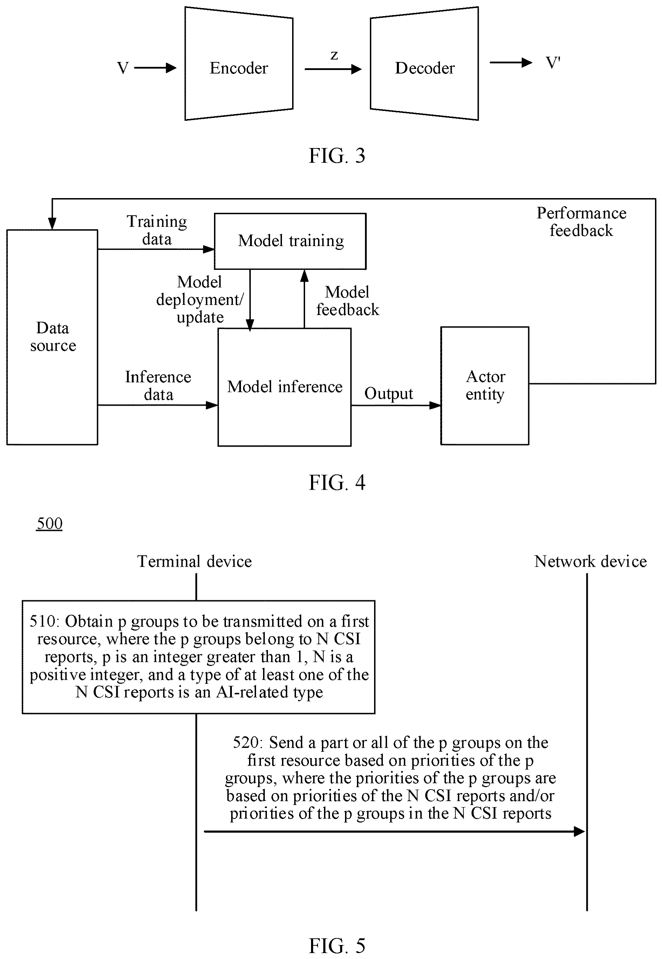

In a possible design, an encoder (encoder) and a decoder (decoder) that are used together may be specifically two parts in a same auto-encoder (auto-encoder, AE), for example, as shown in FIG. 3. An AE model in which an encoder and a decoder are separately deployed on different nodes is a typical bilateral model. The encoder and decoder of the AE model are generally jointly trained and used together. The encoder processes an input V to obtain a processed result z, and the decoder can decode the output z of the encoder to an expected output V'.

The auto-encoder is an unsupervised learning neural network, and is characterized by using input data as label data. Therefore, the auto-encoder may also be understood as a self-supervised learning neural network. The auto-encoder may be configured to compress and recover data. For example, the encoder in the auto-encoder may compress (encode) data A to obtain data B, and the decoder in the auto-encoder may decompress (decode) the data B to recover the data A. Alternatively, this may be understood as that the decoder is an inverse operation of the encoder.

For example, the AI model in embodiments of this application may include an encoder and a decoder. The encoder and the decoder are used together. It may be understood that the encoder and the decoder are AI models that match each other. The encoder and the decoder may be separately deployed on the terminal device and the network device.

Alternatively, the AI model in embodiments of this application may be a one-sided model, and the AI model may be deployed on the terminal device or the network device.

(3) Neural network (neural network, NN):

The neural network is a specific implementation form of AI or machine learning. According to the universal approximation theorem, the neural network can approximate any continuous function in theory, so that the neural network has a capability of learning any mapping.

The neural network may include a neuron, and the neuron may be an operation unit that uses $x_s$ and an intercept 1 as inputs. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

For example, the type of the AI model is a neural network. The AI model in the present disclosure may be a deep neural network (deep neural network, DNN). Based on a network construction mode, the DNN may include a feedforward neural network (feedforward neural network, FNN), a convolutional neural network (convolutional neural network, CNN), a recurrent neural network (recurrent neural network, RNN), and the like.

(4) Training dataset and inference data:

The training dataset is used to train an AI model. The training dataset may include an input of the AI model, or include the input of the AI model and a target output of the AI model. The training dataset includes one or more pieces of training data. The training data may include a training sample input to the AI model, or may include the target output of the AI model. The target output may also be referred to as a label or a label sample.

In the communication field, the training dataset may include simulation data collected by using a simulation platform, or may include experimental data collected in an experiment scenario, or may include actual measurement data collected in an actual communication network. Because geographical environments and channel conditions in which data is generated are different, for example, indoor, outdoor, moving speeds, frequency bands, antenna configurations, or the like are different, collected data may be classified when the data is obtained. For example, data with a same channel propagation environment and a same antenna configuration is classified into one type.

Model training is essentially learning some features of training data from the training data. In a process of training an AI model (for example, a neural network model), because an output of the AI model is expected to be as close as possible to a predicted value that is actually desired, a predicted value of a current network may be compared with a target value that is actually desired, and a weight vector of each layer of the AI model is updated based on a difference between the predicted value and the target value (certainly, before a $1^{st}$ update, an initialization process is generally performed, to be specific, parameters are preconfigured for all layers of the AI model). For example, if the predicted value of the network is large, the weight vector is adjusted to decrease the predicted value, and adjustment is continuously performed until the AI model can predict the target value that is actually desired or a value that is quite close to the target value that is actually desired. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A larger output value (loss) of the loss function indicates a greater difference. In this case, the training for the AI model is a process of minimizing the loss, to make a value of the loss function less than a threshold, or make a value of the loss function satisfy a target requirement. For example, the AI model is a neural network, and adjusting a model parameter of the neural network includes adjusting at least one of the following parameters: a quantity of layers and a width of the neural network, a weight of a neuron, or a parameter in an activation function of the neuron.

The inference data may be used as an input of a trained AI model and used for inference by the AI model. During model inference, the inference data is input into the AI model, to obtain a corresponding output, namely, an inference result.

(5) AI model design:

The AI model design mainly includes a data collection phase (for example, collection of training data and/or inference data), a model training phase, and a model inference phase, and may further include an inference result application phase.

FIG. 4 shows an AI application framework.

In the data collection phase, a data source (data source) is used to provide a training dataset and inference data. In the model training phase, training data (training data) provided by the data source is analyzed or trained to obtain an AI model. The AI model represents a mapping relationship between an input and an output of the model. Obtaining the AI model through learning by using a model training node is equivalent to obtaining the mapping relationship between the input and the output of the model through learning by using the training data. In the model inference phase, the AI model obtained through training in the model training phase is used to perform inference based on the inference data provided by the data source, to obtain an inference result. This phase may also be understood as follows: The inference data is input to the AI model, to obtain an output through the AI model, and the output is the inference result. The inference result may indicate a configuration parameter used (performed) by an actor object, and/or an operation performed by the actor object. The inference result is published in the inference result application phase. For example, the inference result may be planned by an actor (actor) entity in a unified manner. For example, the actor entity may send the inference result to one or more actor objects (for example, a network device or a terminal device) for execution. For another example, the actor entity may further feed back performance of the model to the data source, to facilitate subsequent model update training.

It may be understood that a communication system may include a network element having an artificial intelligence function. The foregoing phases related to the AI model design may be performed by one or more network elements with the artificial intelligence function. In a possible design, the AI function (for example, an AI module or an AI entity) may be configured in an existing network element in the communication system, to implement an AI-related operation, for example, AI model training and/or inference. For example, the existing network element may be a network device or a terminal device. Alternatively, in another possible design, an independent network element may be introduced into the communication system to perform an AI-related operation, for example, AI model training. The independent network element may be referred to as an AI network element, an AI node, or the like. The name is not limited in embodiments of this application. For example, the AI network element may be directly connected to a network device in the communication system, or may be indirectly connected to the network device via a third-party network element. The third-party network element may be a core network element like an authentication management function (authentication management function, AMF) network element or a user plane function (user plane function, UPF) network element, an operations, maintenance, and management (operations, administration, and maintenance, OAM) network element, a cloud server, or another network element. This is not limited. For example, the independent network element may be deployed on one or more of a network device side, a terminal device side, or a core network side. Optionally, the independent network element may be deployed on a cloud-side server. For example, the AI network element 140 is introduced into the communication system shown in FIG. 2.

Training processes for different models may be deployed on different devices or nodes, or may be deployed on a same device or node. Inference processes for different models may be deployed on different devices or nodes, or may be deployed on a same device or node. For example, a model training phase is performed by a terminal device. After training an encoder and a decoder that match each other, the terminal device may send a model parameter of the decoder to a network device. For example, a model training phase is performed by a network device. After training an encoder and a decoder that match each other, the network device may indicate a model parameter of the encoder to a terminal device. For example, a model training phase is performed by an independent AI network element. After training an encoder and a decoder that match each other, the AI network element may send a model parameter of the encoder to a terminal device, and send a model parameter of the decoder to a network device. Then, a model inference phase corresponding to the encoder is performed in the terminal device, and a model inference phase corresponding to the decoder is performed in the network device.

The model parameter may include one or more of the following: a structure parameter of the model (for example, a quantity of layers and/or a weight of the model), an input parameter of the model (for example, an input dimension and a quantity of input ports), or an output parameter of the model (for example, an output dimension and a quantity of output ports). It can be understood that the input dimension may be a size of one piece of input data. For example, when the input data is a sequence, an input dimension corresponding to the sequence may indicate a length of the sequence. The quantity of input ports may be a quantity of pieces of input data. Similarly, the output dimension may be a size of one piece of output data. For example, when the output data is a sequence, an output dimension corresponding to the sequence may indicate a length of the sequence. The quantity of output ports may be a quantity of pieces of output data.

(6) Channel state information (channel state information, CSI):

In a communication system (for example, an LTE communication system or an NR communication system), a network device needs to determine, based on the CSI, configurations such as a resource, an MCS, and precoding that are used to schedule a downlink data channel for a terminal device. It may be understood that the CSI is channel information, and is information that can reflect a channel feature and channel quality. For example, the CSI may be represented by using a channel matrix. For example, the CSI includes the channel matrix, or the CSI may include a channel eigenvector.

CSI measurement means that a receive end resolves channel information based on a reference signal sent by a transmit end, that is, estimates the channel information by using a channel estimation method. A propagation form of a radio signal in a channel may be expressed as $Y=HX+N_{noise}$. H is CSI, X is a reference signal, $N_{noise}$ is noise (noise), and Y is a received signal. The reference signal X is known information specified by the terminal device and the network device. After the received signal Y is obtained, channel estimation may be performed by using a channel estimation algorithm, for example, a least square method or a minimum mean square error method. For example, the reference signal X may include one or more of a channel state information reference signal (channel state information reference signal, CSI-RS), a synchronization signal/broadcast channel block (synchronization signal/physical broadcast channel block, SSB), a sounding reference signal (sounding reference signal, SRS), a demodulation reference signal (demodulation reference signal, DMRS), or the like. The CSI-RS, the SSB, the DMRS, and the like may be used to measure downlink CSI. The SRS, the DMRS, and the like may be used to measure uplink CSI.

An FDD communication scenario is used as an example. In the FDD communication scenario, because uplink and downlink channels are not reciprocal, or reciprocity between uplink and downlink channels cannot be ensured, the network device generally sends a downlink reference signal to the terminal device, and the terminal device performs channel measurement and interference measurement based on the received downlink reference signal to estimate downlink CSI. The terminal device generates a CSI report in a manner predefined in a protocol or in a manner configured by a network device, and feeds back the CSI report to the network device, so that the network device obtains the downlink CSI.

For example, the CSI may include at least one of the following: a channel quality indicator (channel quality indication, CQI), a precoding matrix indicator (precoding matrix indicator, PMI), a rank indicator (rank indicator, RI), a CSI-RS resource indicator (CSI-RS resource indicator, CRI), a layer indicator (layer indicator, LI), a reference signal received power (reference signal received power, RSRP), a signal-to-interference-plus-noise ratio (signal-to-interference-plus-noise ratio, SINR), or the like. The signal-to-interference-plus-noise ratio may also be referred to as a signal-to-interference-plus-noise ratio.

The RI indicates a quantity, recommended by the terminal device, of layers of downlink transmissions. The CQI indicates a modulation and coding scheme, determined by the terminal device, that can be supported in a current channel condition. The PMI indicates precoding recommended by the terminal device. A quantity, indicated by the PMI, of layers of precoding corresponds to the RI. For example, if the RI is n, the PMI indicates n-layer precoding, where n is a positive integer.

It should be understood that the RI, the CQI, the PMI, and the like that are indicated by the CSI report are only recommended values provided by the terminal device, and the network device may perform downlink transmission based on a part or all of information indicated by the CSI report. Alternatively, the network device may perform downlink transmission without referring to information indicated by the CSI report.

An AI technology is introduced into a wireless communication network to obtain an AI model-based CSI feedback mode. A terminal device compresses and feeds back CSI by using an AI model, and a network device recovers compressed CSI by using an AI model. Transmission of a sequence (for example, a bit sequence) is performed in AI-based CSI feedback, and overheads are lower than overheads of CSI in conventional CSI feedback.

FIG. 3 is used as an example. The encoder in FIG. 3 may be a CSI generator, and the decoder may be a CSI reconstructor. The encoder may be deployed on the terminal device, and the decoder may be deployed on the network device. The terminal device may generate CSI feedback information z based on raw CSI information V by using the encoder. The terminal device reports a CSI report, where the CSI report may include the CSI feedback information z. The network device may reconstruct CSI information by using the decoder to obtain recovered CSI information V'.

The raw CSI information V may be obtained by the terminal device through CSI measurement. For example, the raw CSI information V may include a channel response of a downlink channel or an eigenmatrix (a matrix including eigenvectors) of the downlink channel. The encoder processes the eigenmatrix of the downlink channel to obtain the CSI feedback information z, namely, channel state indication information. In other words, an operation of compressing and/or quantizing an eigenmatrix based on a codebook in a related solution is replaced with the operation of processing the eigenmatrix by the encoder, to obtain the CSI feedback information z. The terminal device reports the CSI feedback information z. The network device processes the CSI feedback information z by using the decoder to obtain the recovered CSI information V'. For example, precoding corresponding to the recovered CSI information V' may be the recovered CSI information V'. In other words, the decoder may process the CSI feedback information z and output the recovered CSI information V', namely, the precoding. The precoding corresponding to the recovered CSI information V' may alternatively be precoding obtained by the network device by further processing V'. For example, the network device calculates multi-user precoding based on V'.

The following further describes examples of a training process and an inference process for an AI model in embodiments of this application.

A training dataset used for training the AI model includes a training sample and a sample label. For example, the training sample is channel information determined by a terminal device, and the sample label is real channel information. When an encoder and a decoder belong to a same auto-encoder, the training data may include only a training sample, in other words, the training sample is a sample label, namely, channel information.

A specific training process is as follows: A model training node processes the channel information, namely, the training sample, by using the encoder, to obtain channel state indication information, namely, CSI feedback information, and processes the channel state indication information by using the decoder, to obtain recovered channel information, namely, recovered CSI information. A difference between the recovered CSI information and the corresponding sample label, namely, a value of a loss function, is then calculated, and parameters of the encoder and the decoder are updated based on the value of the loss function, so that the difference between the recovered channel information and the corresponding sample label is minimized, in other words, the loss function is minimized. For example, the loss function may be a minimum mean square error (mean square error, MSE) or a cosine similarity. The foregoing operations are repeated to obtain an encoder and a decoder that meet a target requirement. The model training node may be a terminal device, a network device, or another network element having an AI function in a communication system.

It should be understood that, that the AI model is used for CSI compression is only used as an example above for description. In CSI feedback, the AI model may be further used in another scenario. For example, the AI model may be used for CSI prediction, that is, channel information at one or more future moments is predicted based on channel information measured at one or more historical moments. A specific purpose of the AI model in the CSI feedback scenario is not limited in embodiments of this application.

In a codebook-based CSI feedback mode, for some codebooks with high overheads, for example, codebooks of release (release, R) 15 type (type) II, R16 type II, and R17 type II, report content of a CSI report may be divided into two parts: a first part (part 1) and a second part (part 2). The first part may also be referred to as part 1, and the second part may also be referred to as part 2. CQI, an RI, and the like belong to the first part, and a PMI and the like belong to the second part. Transmission of the second part is generally performed through a physical uplink shared channel (physical uplink shared channel, PUSCH). Because a size of the second part is not fixed, and transmission of multiple CSI reports may need to be performed on a same resource, the size of the second part to be transmitted may exceed a carrying limit of the channel. In a related solution, when a quantity of coded modulation symbols (or modulation symbols) of the second part to be transmitted exceeds a specified threshold, the terminal device discards lower-priority partial content based on a priority order of report content, until the quantity of coded modulation symbols of the second part to be transmitted does not exceed the specified threshold. The quantity of coded modulation symbols of the second part to be transmitted and the specified threshold may be obtained through calculation by using protocol-defined formulas and parameters.

With development of artificial intelligence (artificial intelligence, AI) technologies, an AI model-based CSI feedback mode is generated. Correspondingly, multiple AI-related CSI report types are involved in a CSI feedback process. An AI-related CSI report and a codebook-based CSI report have different content, and the foregoing solution is no longer applicable to the AI model-based CSI feedback mode.

In view of this, this application provides a communication method and a communication apparatus. Priorities of CSI reports including AI-related CSI reports and AI-unrelated CSI reports are determined based on types of the CSI reports. When a size of the CSI reports to be transmitted exceeds a specified threshold, a terminal device can discard lower-priority partial content based on a priority order, so that a network device can obtain high-priority channel information, facilitating subsequent data transmission between the network device and the terminal device. The communication method may be applied to the foregoing communication system, for example, the FDD communication scenario. In addition, optionally, the communication method may be further applied to a TDD communication scenario. This is not limited in the present disclosure.

It should be understood that, in this application, the indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

It should be understood that, in this application, that information C is used to determine information D includes that the information D is determined based only on the information C, and also includes that the information D is determined based on the information C and other information. In addition, that information C is used to determine information D may further include an indirect determining case. For example, the information D is determined based on information E, and the information E is determined based on the information C.

FIG. 5 is a schematic flowchart of a communication method according to this application. As shown in FIG. 5, the method 500 may include the following steps.

510: Obtain p groups to be transmitted on a first resource, where the p groups belong to N CSI reports. p is an integer greater than 1. N is a positive integer. A type of at least one of the N CSI reports is an AI-related type.

520: Send a part or all of the p groups on the first resource based on priorities of the p groups. The priorities of the p groups are based on priorities of the N CSI reports and/or priorities of the p groups in the N CSI reports.

The first resource is a resource that can carry the CSI reports. For example, the first resource may be a PUSCH resource.

That the p groups belong to the N CSI reports means that each CSI report includes at least one of the p groups, and each group belongs to only one CSI report.

For example, in this embodiment of this application, the priorities of the p groups may be understood as priorities of the p groups in the p groups. The priorities of the N CSI reports may be understood as priorities of the N CSI reports in the N CSI reports. The priorities of the p groups in the N CSI reports may be understood as priorities of the p groups in the respective CSI reports to which the p groups belong.

In a possible implementation, N=1. The priorities of the p groups are priorities of the p groups in the CSI report.

When N=1, the p groups belong to the same CSI report. A priority of a group is a priority of the group in the CSI report.

In a possible implementation, N is an integer greater than 1. The priorities of the p groups may be based on the priorities of the N CSI reports. The priority of the CSI report is based on a type of the CSI report.

In other words, a priority of a group is based on a priority of a CSI report to which the group belongs.

For example, a priority of a CSI report depends on whether the CSI report is an AI-related CSI report. The AI-related CSI report is a CSI report whose type is the AI-related type.

Quantities of groups included in different CSI reports may be the same or may be different.

For example, the CSI reports each include one of the p groups, that is, p=N, and a priority of each group may be a priority of a CSI report to which the group belongs.

In a possible implementation, N is an integer greater than 1. The priorities of the p groups may be based on the priorities of the N CSI reports and the priorities of the p groups in the respective CSI reports to which the p groups belong. The priority of the CSI report is based on a type of the CSI report.

In other words, a priority of a group in the p groups may be based on a priority of a CSI report to which the group belongs and a priority of the group in the CSI report.

For example, a priority of a CSI report depends on whether the CSI report is an AI-related CSI report.

Optionally, step 520 may include: selecting a part of groups from the p groups based on the priorities of the p groups, and sending the part of groups on the first resource.

In some scenarios, the first resource may fail to carry the p groups. In this case, one or more groups may be discarded from the p groups based on the priorities of the p groups, so that the first resource can carry a part of remaining groups.

For example, the part of groups may be a part of groups with highest priorities in the p groups. In this way, a network device can obtain channel information in a higher-priority group. For example, the priority may be related to importance of information in the group. In this way, the network device can obtain important information, or information in an important group.

Optionally, step 520 may include: determining locations of the part or all of the p groups on the first resource based on the priorities of the p groups, and sending the part or all of the p groups on the first resource.

For example, the part or all of the p groups are sorted based on the priorities of the p groups, and sorting of the part or all of the groups is consistent with an arrangement order of the part or all of the groups on the first resource.

It should be understood that the foregoing is merely an example, and does not constitute any limitation on the solutions in embodiments of this application. For example, appropriate locations on the first resource may be further selected for the p groups based on the priorities of the p groups.

According to the solutions in this embodiment of this application, CSI reports to be transmitted on a same resource include an AI-related CSI reports, and a part or all of the p groups are sent based on the priorities of the p groups to be transmitted on a same resource. This helps appropriately use resources, so that the network device obtains desired information. For example, when the same resource cannot carry all of the p groups, a part of groups may be selected based on the priorities of the p groups for sending, and a higher-priority group is sent, and a lower-priority group is discarded, so that the network device can obtain channel information in the higher-priority group, for example, obtain channel information in an important group. For example, the priorities of the p groups may be determined depending on whether the CSI reports are AI-related, and then a higher-priority group is sent. For another example, an AI-related CSI report may also be divided into multiple groups. The priorities of the p groups may be determined based on priorities of the groups in the CSI report, and then a higher-priority group is sent. In this way, information sending flexibility can be improved, and even if the whole AI-related CSI report cannot be sent, a probability that the network device obtains a part of groups can be increased, so that the network device obtains partial information in the CSI report.

The AI-related CSI report may also be understood as a CSI report related to an AI model. The AI model is used to generate channel information to be fed back to the network device. In other words, the AI model generates a part or all of content of the CSI report, or content generated by the AI model is processed and used as a part or all of the content of the CSI report.

For example, the AI model may be a two-sided model. A submodel that is in the two-sided model and that is deployed on a terminal device may be used to generate the channel information to be fed back to the network device. A submodel deployed on the network device may be used to reconstruct the channel information. In other words, in the two-sided model, the channel information fed back to the network device may be generated by the submodel of the AI model.

For example, the AI model may include a CSI generator and a CSI reconstructor. The CSI generator may be deployed on the terminal device, and the CSI reconstructor may be deployed on the network device. The terminal device may generate CSI feedback information via the CSI generator, namely, the channel information to be fed back to the network device, and feed back the CSI feedback information to the network device by using a CSI report. The network device may reconstruct CSI information via the CSI reconstructor to obtain recovered CSI information.

For detailed descriptions of the CSI generator and the CSI reconstructor, refer to the foregoing descriptions. To avoid repetition, details are not described herein again.

For example, the AI model may be a one-sided model. The model may be deployed on the terminal device, and is used to generate the channel information to be fed back to the network device.

For example, the AI model may be used to predict channel information at one or more future moments, namely, the channel information to be fed back to the network device, and fed back the channel information to the network device by using a CSI report.

It should be understood that the foregoing is merely an example, and the AI model may alternatively be another type of model. This is not limited in embodiments of this application. For ease of description, in this embodiment of this application, an example in which the AI model includes the CSI generator and the CSI reconstructor is mainly used for description, and does not constitute any limitation on the solutions in embodiments of this application.

In a conventional CSI feedback mode, overheads of a part of channel features are high, and overheads of a part of channel features are low. For example, processing such as compression and/or quantization may be performed on a channel feature with higher overheads by using the AI model, and a processing result is fed back to the network device by using a CSI report. For a channel feature with lower overheads, the conventional feedback mode may still be used. For example, a feedback is provided to the network device in a codebook-based feedback mode.

The codebook-based CSI feedback mode is used as an example. Overheads of a CSI feedback amount in the CSI report are mainly overheads of a PMI. The PMI is obtained by compressing and/or quantizing an eigenmatrix of a channel based on a codebook. For example, CSI feedback information may be generated through the CSI generator. A function of the CSI feedback information is similar to a function of the PMI. The CSI feedback information may be referred to as an AI-PMI. For example, the CSI feedback information may be obtained by processing the eigenmatrix of the channel by the CSI generator. In other words, the operation of compressing and/or quantizing the eigenmatrix based on the codebook is replaced with the operation of processing the eigenmatrix by the CSI generator, to obtain the CSI feedback information.

Report content of the CSI report may indicate the CSI feedback information. The network device reconstructs the recovered CSI information through the CSI reconstructor, to determine precoding. In addition, the report content of the CSI report may further indicate a CSI feedback amount in the conventional feedback mode, for example, an RI or a CQI.

It should be understood that the foregoing is merely an example, and the CSI feedback information generated by the AI model may further indicate other content. This is not limited in embodiments of this application.

For example, the AI-related type may be classified into multiple types based on the report content of the CSI report.

Optionally, the AI-related type may include one or more of a first CSI report type, a second CSI report type, or a third CSI report type. Report content of the first CSI report type includes channel information obtained through inference by the AI model, report content of the second CSI report type includes performance information of the AI model, or report content of the third CSI report type includes channel information for implementing an operation related to the AI model.

A CSI report corresponding to the first CSI report type may also be referred to as a CSI report based on AI model inference. A CSI report corresponding to the second CSI report type may also be referred to as a CSI report for performance monitoring. A CSI report corresponding to the third CSI report type may also be referred to as a CSI report for data collection.

The following describes the foregoing three types by using examples.

The CSI report based on AI model inference is a CSI report whose report content includes information related to an output of the AI model. For example, the report content may include the output of the AI model, or the report content includes information obtained from the output of the AI model. For example, the output of the AI model may be the channel information obtained through inference by the AI model. For example, the report content of the CSI report may indicate CSI feedback information generated by the CSI generator. Further, the report content of the CSI report may further indicate another CSI feedback amount, for example, an RI or a CQI.

The CSI report for data collection is a CSI report whose report content includes the channel information for implementing the operation related to the AI model. Further, the report content of the CSI report may further indicate another CSI feedback amount, for example, an RI or a CQI.

For example, the operation related to the AI model may include one or more of the following: AI model training, AI model update, AI model selection, AI model switching, AI model activation, AI model deactivation, AI model performance monitoring, or AI model testing.

The channel information may be high-precision CSI. The high-precision CSI means that the CSI is not compressed and/or quantized, or compared with a PMI or an AI-PMI, the high-precision CSI is compressed and/or quantized to a lower degree. In other words, more CSI is reserved in the high-precision CSI, or the high-precision CSI has higher precision.

For example, the high-precision CSI may be fed back in a codebook-based mode. For example, raw CSI measured by the terminal device is processed based on an R16 type II codebook or the like, and a processing result is fed back to the network device by using a CSI report.

For example, the high-precision CSI may be fed back in the codebook-based mode, but in comparison with a codebook in an existing protocol, more raw CSI is reserved.

In other words, the raw CSI measured by the terminal device is compressed and/or quantized by using the codebook. However, in comparison with the codebook in an existing protocol, more raw CSI is reserved.

For example, the high-precision CSI may be fed back in the codebook-based mode, but a new parameter is introduced, so that the CSI obtained by the network device has higher precision.

The codebook-based feedback mode may be understood as: selecting one or more bases from a predetermined codebook for weighting to express the raw CSI. Generally, feedback overheads may be controlled by using a quantity of selected bases, a quantity of non-zero weighting coefficients, and quantization precision of a weighting coefficient. The new parameter is introduced, so that the precision of the CSI obtained by the network device is higher. It may be understood that the network device can obtain CSI with higher precision by using one or more of a larger quantity of bases, a larger quantity of non-zero weighting coefficients, or higher quantization precision of a weighting coefficient.

For example, the high-precision CSI may be fed back in a scalar quantization mode. Scalar quantization may include W-bit scalar quantization, floating point number (float) 16 quantization, float32 quantization, or the like. For example, the raw CSI measured by the terminal device is quantized in the float16 quantization mode, to obtain data-CSI, and the data-CSI is fed back to the network device by using a CSI report. W may be a positive integer. For example, W may be any integer from 1 to 8.

For ease of description, the channel information is referred to as data (data)-CSI in this embodiment of this application. The report content of the CSI report for data collection may include the data-CSI. The data-CSI may be used to implement the operation related to the AI model.

For example, the data-CSI may be used as training data in a training process of the AI model. For example, the data-CSI may be used as a training sample that is input to the AI model and/or a target output of the AI model. The target output may also be referred to as a label, a sample label, a truth value (ground-truth), a target, or the like. For example, the data-CSI may be used as a target output of the model in a performance monitoring process of the AI model. For example, the data-CSI may be used as a target output of the model in a test process of the AI model.

For example, the data-CSI may be a channel response or an eigenmatrix of the channel.

The channel response may also be referred to as a channel matrix.

There may be one or more eigenmatrices of the channel.

The CSI report for performance monitoring is a CSI report whose report content includes the performance information of the AI model.

For example, the performance information may include accuracy of an output result of the AI model.

For example, the AI model includes a CSI generation model and a CSI reconstruction model. The accuracy of the output result of the AI model may also be understood as accuracy of the recovered CSI information. For example, the accuracy of the recovered CSI information may be reflected by a similarity or an error between the raw CSI information and the recovered CSI information, for example, a cosine similarity between the raw CSI information and the recovered CSI information, or a mean square error between the raw CSI information and the recovered CSI information. The cosine similarity may be a generalized cosine similarity (generalized cosine similarity, GCS), a square generalized cosine similarity (square generalized cosine similarity, SGCS), or the like. The mean square error may be a minimum mean square error (mean square error, MSE), a normalized minimum mean square error (normalized mean square error, NMSE), or the like. It should be understood that, the foregoing is merely an example, and the accuracy of the recovered CSI information may also be reflected by a similarity or an error between the recovered CSI information and channel information obtained in another manner. For example, the accuracy of the recovered CSI information may also be reflected by a similarity or an error between the recovered CSI information and channel information obtained by the network device in the codebook-based feedback mode.

For example, the performance information may include a representation of the AI model in system performance, for example, include at least one of the following: a throughput, an acknowledgement (acknowledgement, ACK) ratio or a negative acknowledgement (negative acknowledgement, NACK) ratio, a block error rate (block error rate, BLER), or a hypothetical BLER (hypothetical BLER).

For example, the performance information may include whether the AI model meets a preset performance requirement.

For example, the performance requirement may be that a GCS between the raw CSI information and the recovered CSI information is greater than a specified threshold.

The performance requirement may be predefined. Alternatively, the performance requirement may be configured by a base station. Alternatively, the performance requirement may be determined by the terminal device.

The AI-related CSI report may alternatively be combined with another CSI report into one CSI report.

The CSI report for performance monitoring is used as an example. The CSI report for performance monitoring is generally small and may be combined with another CSI report into one CSI report.

For example, the CSI report for performance monitoring and the CSI report based on AI model inference may be combined into one CSI report. In other words, the report content of the CSI report may indicate the channel information obtained through inference by the AI model and the performance information of the AI model.

For example, the AI model includes a CSI generator and a CSI reconstructor. The terminal device may perform channel measurement based on reference signal #1 sent by the network device, to obtain raw CSI information #1. The terminal device processes raw CSI information #1 based on the CSI generator, generates CSI feedback information #1, and feeds back CSI feedback information #1 to the network device by using a CSI report. The network device reconstructs CSI feedback information #1 through the CSI reconstructor, to obtain recovered CSI information #1. The network device may send recovered CSI information #1 to the terminal device, and the terminal device may evaluate accuracy of recovered CSI information #1 based on recovered CSI information #1 and raw CSI information #1. The terminal device may perform channel measurement based on reference signal #2 sent by the network device, to obtain raw CSI information #2. The terminal device processes raw CSI information #2 based on the CSI generator, and generates CSI feedback information #2. When the terminal device provides a CSI feedback, the CSI report may include CSI feedback information #2 and the accuracy of recovered CSI information #1. It should be understood that the foregoing is merely an example, and does not constitute any limitation on the solutions in embodiments of this application.

For example, AI-related types may be classified into multiple types based on AI models associated with CSI reports.

For example, when multiple CSI reports are associated with different AI models, types of the multiple CSI reports may be considered as different types.

The foregoing is merely an example. The AI-related CSI report may further include another type. This is not limited in embodiments of this application.

For example, a priority of the AI-related CSI report is higher than a priority of another CSI report. Alternatively, the priority of the AI-related CSI report is lower than a priority of another CSI report.

Optionally, the priority of the CSI report may alternatively be based on at least one of the following: a periodicity of the CSI report, a channel on which the CSI report is carried, whether the CSI report includes a layer 1 (layer 1, L1)-RSRP or an L1-SINR, a serving cell to which the CSI report belongs, or an ID of the CSI report.

In a possible implementation, this embodiment may be specific only to the N CSI reports carried on a same channel, namely, the p groups belong to the N CSI reports carried on the same channel. If CSI reports carried on different channels collide, for example, the terminal device needs to send multiple CSI reports simultaneously, and the multiple CSI reports are carried on different channels, processing may be performed in another manner. For example, only one or more higher-priority CSI reports are sent, and the higher-priority CSI report may be one or more CSI reports carried on a same channel.

In a possible implementation, this embodiment may be specific only to the N CSI reports that are carried on a same channel and that have a same periodicity (that is, the CSI reports are all periodic CSI reports, all semi-persistent CSI reports, or all aperiodic CSI reports), that is, the p groups belong to the N CSI reports that are carried on the same channel and that have the same periodicity. If CSI reports carried on different channels or CSI reports with different periodicities collide, for example, the terminal device needs to send multiple CSI reports simultaneously, and the multiple CSI reports are carried on different channels or the multiple CSI reports have different periodicities, processing is performed in another manner. For example, only one or more higher-priority CSI reports are sent, and the higher-priority CSI report may be one or more CSI reports carried on a same channel that have a same periodicity.

The following uses Manner 1 and Manner 2 as examples to describe the priority of the CSI report.

Manner 1:

In a possible implementation, the priority of the CSI report is determined based on one or more parameters, at least one of the one or more parameters indicates the type of the CSI report, and the at least one parameter further indicates other information of the CSI report.

In Manner 1, all or a part of parameters indicating the type of the CSI report further indicate other information of the CSI report.

Optionally, the priority of the CSI report is determined based on one or more parameters. The one or more parameters indicate one or more of the following: a periodicity of the CSI report, a channel on which the CSI report is carried, whether the CSI report includes an L1-RSRP or an L1-SINR, a serving cell to which the CSI report belongs, or an ID of the CSI report. At least one of the at least one or more parameters further indicates the type of the CSI report.

Types of the CSI report may include the AI-related type and an AI-unrelated type. In this embodiment of this application, a CSI report corresponding to the AI-unrelated type may also be referred to as an AI-unrelated CSI report.

In other words, the type of the CSI report may be used to distinguish whether the CSI report is an AI-related CSI report. In other words, the type of the CSI report may be used to distinguish whether the CSI report is an AI-related CSI report or an AI-unrelated CSI report.

For example, the type of the CSI report may include two types: the AI-related type and the AI-unrelated type.

For example, the AI-related type may further include: the first CSI report type, the second CSI report type, or the third CSI report type. In this case, the type of the CSI report may include: the AI-unrelated type, the first CSI report type, the second CSI report type, or the third CSI report type.

For a parameter, different values of the parameter may indicate different information.

For example, the priority $pri_{CSI}$ of the CSI report may satisfy the following formula:

$$pri_{CSI}(y,k,c,s) = N_k \cdot N_{cells} \cdot M_s \cdot y + N_{cells} \cdot M_s \cdot k + M_s \cdot c + s.$$

A smaller value of $pri_{CSI}$ indicates a higher priority. y is used to distinguish the periodicity of the CSI report and the channel on which the CSI report is carried. For example, y=0 indicates an aperiodic CSI report carried on a PUSCH, y=1 indicates a semi-persistent CSI report carried on a PUSCH, y=2 indicates a semi-persistent CSI report carried on a PUCCH, and y=3 indicates a periodic CSI report carried on a PUCCH. k is used to distinguish whether the CSI report includes the L1-RSRP or the L1-SINR. For example, k=0 indicates a CSI report including the L1-RSRP or the L1-SINR, and k=1 indicates a CSI report not including the L1-RSRP or the L1-SINR. c is used to distinguish the serving cell to which the CSI report belongs. For example, c may be an index of the serving cell. s is used to distinguish the ID of the CSI report. For example, s may be the ID of the CSI report. $N_k$ indicates a quantity of all possible values of k. For example, when the value of k is 0 or 1, $N_k$=2. $N_{cells}$ indicates a maximum value of a quantity of serving cells, namely, a quantity of all possible values of c. $M_s$ indicates a maximum value of a quantity of CSI reports, namely, a quantity of all possible values of s.

For example, values of a part or all of the foregoing parameters may be added to indicate the type of the CSI report. For example, values of one or more parameters in y, k, c, s are added to distinguish between an AI-related CSI report and an AI-unrelated CSI report.

The at least one parameter indicating the type of the CSI report may be one parameter.

For example, the parameter indicating the type of the CSI report may be s. There is a correspondence between the ID of the CSI report and the type of the CSI report. For example, the network device may configure different IDs for an AI-related CSI report and an AI-unrelated CSI report. The ID of the AI-related CSI report is greater than the ID of the AI-unrelated CSI report, or the ID of the AI-related CSI report is less than the ID of the AI-unrelated CSI report.

In this case, distinguishing whether the CSI report is an AI-related CSI report is not shown.

For example, the parameter indicating the type of the CSI report may be y. The value of y is added to distinguish between an AI-related CSI report and an AI-unrelated CSI report. In other words, y is used to distinguish the periodicity of the CSI report, the channel on which the CSI report is carried, and the type of the CSI report.

For example, y=0 indicates an AI-unrelated aperiodic CSI report carried on a PUSCH, y=1 indicates an AI-unrelated semi-persistent CSI report carried on a PUSCH, y=2 indicates an AI-unrelated semi-persistent CSI report carried on a PUCCH, y=3 indicates an AI-unrelated periodic CSI report carried on a PUCCH, y=4 indicates a CSI report for performance monitoring, y=5 indicates a CSI report based on AI model inference, and y=6 indicates a CSI report for data collection.

It should be understood that the foregoing values of y and the meanings corresponding to the values are merely examples. In another implementation, there may be another correspondence between a value of y and a meaning of the value. Alternatively, in another implementation, a correspondence between a value of y and a meaning of the value may be a part of the foregoing correspondence. For example, meanings of y being 0, 1, 2, and 3 are shown above, and y=4 indicates an AI-related CSI report. In this case, a specific type of the AI-related CSI report is not distinguished. For another example, meanings of y being 0, 1, 2, and 3 are shown above, y=4 indicates a CSI report for performance monitoring and a CSI report based on AI model inference, and y=5 indicates a CSI report for data collection. In this case, the CSI report for performance monitoring and the CSI report based on AI model inference may be a same CSI report.

For example, the parameter indicating the type of the CSI report may be k. The value of k is added to distinguish between an AI-related CSI report and an AI-unrelated CSI report. In other words, k is used to distinguish the type of the CSI report and whether the CSI report includes the L1-RSRP or the L1-SINR.

For example, k=0 indicates an AI-unrelated CSI report including the L1-RSRP or the L1-SINR, k=1 indicates an AI-unrelated CSI report not including the L1-RSRP or the L1-SINR, k=2 indicates a CSI report for performance monitoring, k=3 indicates a CSI report based on AI model inference, and k=4 indicates a CSI report for data collection.

It should be understood that the foregoing values of k and the meanings corresponding to the values are merely examples. In another implementation, there may be another correspondence between a value of k and a meaning of the value. Alternatively, in another implementation, a correspondence between a value of k and a meaning of the value may be a part of the foregoing correspondence.

The at least one parameter indicating the type of the CSI report may be multiple parameters.

For example, the parameters indicating the type of the CSI report may be y and k. The values of y and k are added to distinguish between an AI-related CSI report and an AI-unrelated CSI report. To be specific, y is used to distinguish whether the CSI report is an AI-related CSI report, the channel on which the CSI report is carried, and the type of the CSI report; and k is used to distinguish between types of AI-related CSI reports and whether the CSI report includes the L1-RSRP or the L1-SINR.

For example, y=0 indicates an AI-unrelated aperiodic CSI report carried on a PUSCH, y=1 indicates an AI-unrelated semi-persistent CSI report carried on a PUSCH, y=2 indicates an AI-unrelated semi-persistent CSI report carried on a PUCCH, y=3 indicates an AI-unrelated periodic CSI report carried on a PUCCH, and y=4 indicates an AI-related CSI report. k=0 indicates that the CSI report includes the L1-RSRP or the L1-SINR or performance monitoring information for reflecting the AI model; k=1 indicates that the CSI report does not include the L1-RSRP, the L1-SINR, or the performance monitoring information for reflecting the AI model, and that the CSI report is a CSI report based on AI model inference; and k=2 indicates that the CSI report does not include the L1-RSRP, the L1-SINR, or the performance monitoring information for reflecting the AI model, and that the CSI report is a CSI report for data collection. A CSI report that includes the performance monitoring information for reflecting the AI model is a CSI report for performance monitoring.

It should be understood that the foregoing values of y and k and the meanings corresponding to the values are merely examples. In another implementation, there may be other correspondences between values of y and k and meanings of the values. Alternatively, in another implementation, correspondences between values of y and k and meanings of the values may be a part of the foregoing correspondences.

The foregoing formulas and related parameters are merely examples, and do not constitute a limitation on the solutions in embodiments of this application.

Manner 2:

Optionally, the priority of the CSI report is determined based on one or more parameters, and at least one of the one or more parameters indicates the type of the CSI report. The at least one parameter does not indicate other information of the CSI report.

For related descriptions of the type of the CSI report, refer to Manner 1. Details are not described herein again.

In Manner 2, the at least one parameter indicates only the type of the CSI report, and does not indicate other information.

Optionally, another parameter in the one or more parameters indicates at least one of the following: a periodicity of the CSI report, a channel on which the CSI report is carried, whether the CSI report includes an L1-RSRP or an L1-SINR, a serving cell to which the CSI report belongs, or an ID of the CSI report.

For example, based on the four parameters y, k, c, and s, at least one parameter may be added to indicate the type of the CSI report. For example, the at least one parameter may be $l$. The added parameter $l$ is used to distinguish between an AI-related CSI report and an AI-unrelated CSI report. $l$ may be located in a most significant bit, a least significant bit, or any location among $y, k, c, s$. A coefficient of a parameter in the most significant bit is the largest, and a coefficient of a parameter in the least significant bit is the smallest. The formula in Manner 1 is used as an example. Parameters in the most significant bit to the least significant bit are respectively $y, k, c, s$.

For example, $l$ may be located in the most significant bit, and the priority $pri_{CSI}$ of the CSI report may satisfy the following formula:

$$pri_{CSI}(l,y,k,c,s) = N_y \cdot N_k \cdot N_{cells} \cdot M_s \cdot l + N_k \cdot N_{cells} \cdot M_s \cdot y + N_{cells} \cdot M_s \cdot k + M_s \cdot c + s .$$

A smaller value of $pri_{CSI}$ indicates a higher priority.

$l$ is used to distinguish the type of the CSI report. For example, $l$=0 indicates an AI-unrelated CSI report, $l$=1 indicates a CSI report for performance monitoring, $l$=2 indicates a CSI report based on AI model inference, and $l$=3 indicates a CSI report for data collection. $N_y$ indicates a quantity of all possible values of y. For example, when y=0, 1, 2, or 3, $N_y$=4. y is used to distinguish the periodicity of the CSI report and the channel on which the CSI report is carried. For example, y=0 indicates an aperiodic CSI report carried on a PUSCH, y=1 indicates a semi-persistent CSI report carried on a PUSCH, y=2 indicates a semi-persistent CSI report carried on a PUCCH, and y=3 indicates a periodic CSI report carried on a PUCCH. k is used to distinguish whether the CSI report includes the L1-RSRP or the L1-SINR. For example, k=0 indicates a CSI report including the L1-RSRP or the L1-SINR, and k=1 indicates a CSI report not including the L1-RSRP or the L1-SINR. c is used to distinguish the serving cell to which the CSI report belongs. s is used to distinguish the ID of the CSI report. $N_k$ indicates a quantity of all possible values of k. $N_{cells}$ indicates a maximum value of a quantity of serving cells. $M_s$ indicates a maximum value of a quantity of CSI reports.

It should be understood that the foregoing values of $l$ and the meanings corresponding to the values are merely examples. In another implementation, there may be another correspondence between a value of $l$ and a meaning of the value. Alternatively, in another implementation, a correspondence between a value of $l$ and a meaning of the value may be a part of the foregoing correspondence.

For example, $l$ may be located between a location of y and a location of k, and the priority $pri_{CSI}$ of the CSI report may satisfy the following formula:

$$pri_{CSI}(l,y,k,c,s) = N_l \cdot N_k \cdot N_{cells} \cdot M_s \cdot y + N_k \cdot N_{cells} \cdot M_s \cdot l + N_{cells} \cdot M_s \cdot k + M_s \cdot c + s .$$

A smaller value of $pri_{CSI}$ indicates a higher priority.

$l$ is used to distinguish the type of the CSI report. For example, $l$=0 indicates an AI-unrelated CSI report, $l$=1 indicates a CSI report for performance monitoring, $l$=2 indicates a CSI report based on AI model inference, and $l$ =3 indicates a CSI report for data collection. $N_l$ indicates a quantity of all possible values of $l$. For example, when $l$=0, 1, 2, or 3, $N_l$=4. Meanings of other parameters are the same as those described above. Details are not described herein again.

It should be understood that the foregoing values of $l$ and the meanings corresponding to the values are merely examples. In another implementation, there may be another correspondence between a value of $l$ and a meaning of the value. Alternatively, in another implementation, a correspondence between a value of $l$ and a meaning of the value may be a part of the foregoing correspondence. In another implementation, multiple parameters may be added to indicate the type of the CSI report. This is not limited in embodiments of this application.

The foregoing formulas and related parameters are merely examples, and do not constitute a limitation on the solutions in embodiments of this application.

In addition, Manner 1 and Manner 2 above may alternatively be used in combination. The at least one parameter indicating the type of the CSI report may include multiple parameters. A part of the parameters indicate only the type of the CSI report, and the other parameters indicate the type of the CSI report and other information.

For example, a part of the parameters are used to distinguish between a part of AI-related CSI reports and AI-unrelated reports, and the other parameters are used to distinguish between the other AI-related CSI reports and AI-unrelated CSI reports, and indicate other information.

For example, the priority $pri_{CSI}$ of the CSI report may satisfy the following formula:

$$pri_{CSI}(l,y,k,c,s) = N_l \cdot N_k \cdot N_{cells} \cdot M_s \cdot y + N_k \cdot N_{cells} \cdot M_s \cdot l + N_{cells} \cdot M_s \cdot k + M_s \cdot c + s.$$

A smaller value of $pri_{CSI}$ indicates a higher priority.

$l$ is used to distinguish the type of the CSI report. For example, $l=0$ indicates an AI-unrelated CSI report, and $l=1$ indicates an AI-related CSI report. k is used to distinguish the type of the CSI report and whether the CSI report includes the L1-RSRP or the L1-SINR. For example, k=0 indicates that the CSI report includes the L1-RSRP or the L1-SINR or performance monitoring information for reflecting the AI model; k=1 indicates that the CSI report does not include the L1-RSRP, the L1-SINR, or the performance monitoring information for reflecting the AI model, and that the CSI report is a CSI report based on AI model inference; and k=2 indicates that the CSI report does not include the L1-RSRP, the L1-SINR, or the performance monitoring information for reflecting the AI model, and that the CSI report is a CSI report for data collection. $N_l$ indicates a quantity of all possible values of $l$. For example, when $l=0$ or 1, $N_l$=2. For example, y=0 indicates an aperiodic CSI report carried on a PUSCH, y=1 indicates a semi-persistent CSI report carried on a PUSCH, y=2 indicates a semi-persistent CSI report carried on a PUCCH, and y=3 indicates a periodic CSI report carried on a PUCCH. c is used to distinguish the serving cell to which the CSI report belongs. s is used to distinguish the ID of the CSI report. $N_k$ indicates a quantity of all possible values of k. $N_{cells}$ indicates a maximum value of a quantity of serving cells. $M_s$ indicates a maximum value of a quantity of CSI reports.

Optionally, the priority of the CSI report may be based on an AI model associated with the CSI report.

The following uses Manner 3 and Manner 4 as examples to describe the priority of the CSI report.

Manner 3:

In a possible implementation, the priority of the CSI report is determined based on one or more parameters, at least one of the one or more parameters indicates the AI model associated with the CSI report, and the at least one parameter further indicates other information of the CSI report.

In Manner 3, all or a part of parameters indicating the AI model associated with the CSI report further indicate other information of the CSI report.

Optionally, the priority of the CSI report is determined based on one or more parameters. The one or more parameters indicate one or more of the following: a periodicity of the CSI report, a channel on which the CSI report is carried, whether the CSI report includes an L1-RSRP or an L1-SINR, a serving cell to which the CSI report belongs, or an ID of the CSI report. At least one of the at least one or more parameters further indicates an identifier of the AI model associated with the CSI report.

The priority calculation formula in Manner 1 is used as an example, and the priority of the CSI report is determined based on the four parameters: $y, k, c, s$. In Manner 3, values of a part or all of parameters in $y, k, c, s$ may be added to distinguish the identifier of the AI model associated with the CSI report.

The at least one parameter indicating the identifier of the AI model associated with the CSI report may be one parameter.

For example, the parameter indicating the identifier of the AI model associated with the CSI report may be y. The value of y is added to distinguish the identifier of the AI model associated with the CSI report. In other words, y is used to distinguish the periodicity of the CSI report, the channel on which the CSI report is carried, and the identifier of the AI model associated with the CSI report.

For example, the priority $pri_{CSI}$ of the CSI report may satisfy the following formula:

$$pri_{CSI}(y,k,c,s) = N_k \cdot N_{cells} \cdot M_s \cdot y + N_{cells} \cdot M_s \cdot k + M_s \cdot c + s.$$

A smaller value of $pri_{CSI}$ indicates a higher priority. For example, y=0 indicates an AI-unrelated aperiodic CSI report carried on a PUSCH, y=1 indicates an AI-unrelated semi-persistent CSI report carried on a PUSCH, y=2 indicates an AI-unrelated semi-persistent CSI report carried on a PUCCH, y=3 indicates an AI-unrelated periodic CSI report carried on a PUCCH, y=4 indicates that the identifier of the AI model associated with the CSI report is 0, y=5 indicates that the identifier of the AI model associated with the CSI report is 1, and so on. k is used to distinguish whether the CSI report includes the L1-RSRP or the L1-SINR. For example, k=0 indicates a CSI report including the L1-RSRP or the L1-SINR, and k=1 indicates a CSI report not including the L1-RSRP or the L1-SINR. c is used to distinguish the serving cell to which the CSI report belongs. For example, c may be an index of the serving cell. s is used to distinguish the ID of the CSI report. For example, s may be the ID of the CSI report. $N_k$ indicates a quantity of all possible values of k. For example, when the value of k is 0 or 1, $N_k$=2. $N_{cells}$ indicates a maximum value of a quantity of serving cells, namely, a quantity of all possible values of c.

$M_s$ indicates a maximum value of a quantity of CSI reports, namely, a quantity of all possible values of s.

It should be understood that the foregoing values of y and the meanings corresponding to the values are merely examples. In another implementation, there may be another correspondence between a value of y and a meaning of the value. Alternatively, in another implementation, a correspondence between a value of y and a meaning of the value may be a part of the foregoing correspondence.

Manner 4:

Optionally, the priority of the CSI report is determined based on one or more parameters, and at least one of the one or more parameters indicates the AI model associated with the CSI report. The at least one parameter does not indicate other information of the CSI report.

In Manner 4, the at least one parameter indicates only the AI model associated with the CSI report, and does not indicate other information.

Optionally, another parameter in the one or more parameters indicates at least one of the following: a periodicity of the CSI report, a channel on which the CSI report is carried, whether the CSI report includes an L1-RSRP or an L1-SINR, a serving cell to which the CSI report belongs, or an ID of the CSI report.

For example, based on the four parameters y, k, c, and s, at least one parameter may be added to indicate the AI model associated with the CSI report. For example, the at least one parameter may be m. The added parameter m is used to distinguish an identifier of the AI model associated with the CSI report. m may be located in a most significant bit, a least significant bit, or any location among *y, k, c, s* . A coefficient of a parameter in the most significant bit is the largest, and a coefficient of a parameter in the least significant bit is the smallest. The formula in Manner 1 is used as an example. Parameters in the most significant bit to the least significant bit are respectively *y, k, c, s* .

For example, m may be located in the most significant bit, and the priority *pri*$_{CSI}$ of the CSI report may satisfy the following formula:

$$pri_{CSI}(m,y,k,c,s) = N_y \cdot N_k \cdot N_{cells} \cdot M_s \cdot m + N_k \cdot N_{cells} \cdot M_s \cdot y + N_{cells} \cdot M_s \cdot k + M_s \cdot c + s$$
.

A smaller value of *pri*$_{CSI}$ indicates a higher priority.

m is used to distinguish an identifier of the AI model associated with the CSI report. For example, m=0 indicates an AI-unrelated CSI report, m=1 indicates that the identifier of the AI model associated with the CSI report is 0, m=2 indicates that the identifier of the AI model associated with the CSI report is 1, and so on. $N_y$ indicates a quantity of all possible values of y. For example, when y=0, 1, 2, or 3, $N_y$=4. y is used to distinguish the periodicity of the CSI report and the channel on which the CSI report is carried. For example, y=0 indicates an aperiodic CSI report carried on a PUSCH, y=1 indicates a semi-persistent CSI report carried on a PUSCH, y=2 indicates a semi-persistent CSI report carried on a PUCCH, and y=3 indicates a periodic CSI report carried on a PUCCH. k is used to distinguish whether the CSI report includes the L1-RSRP or the L1-SINR. For example, k=0 indicates a CSI report including the L1-RSRP or the L1-SINR, and k=1 indicates a CSI report not including the L1-RSRP or the L1-SINR. c is used to distinguish the serving cell to which the CSI report belongs. s is used to distinguish the ID of the CSI report. $N_k$ indicates a quantity of all possible values of k. $N_{cells}$ indicates a maximum value of a quantity of serving cells. $M_s$ indicates a maximum value of a quantity of CSI reports.

It should be understood that the foregoing values of m and the meanings corresponding to the values are merely examples. In another implementation, there may be another correspondence between a value of m and a meaning of the value. Alternatively, in another implementation, a correspondence between a value of m and a meaning of the value may be a part of the foregoing correspondence.

In addition, Manner 3 and Manner 4 above may alternatively be used together with Manner 1 and Manner 2.

For example, the priority of the CSI report is determined based on one or more parameters, at least one of the one or more parameters indicates the type of the CSI report, and the at least one of the one or more parameters indicates the AI model associated with the CSI report.

A combination of Manner 1 and Manner 3 is used as an example. For example, the priority of the CSI report is determined based on one or more parameters, at least one of the one or more parameters indicates the type of the CSI report, the at least one parameter further indicates the AI model associated with the CSI report, and the at least one parameter further indicates other information of the CSI report.

A combination of Manner 1 and Manner 3 is used as an example. For example, the priority of the CSI report is determined based on one or more parameters, at least one of the one or more parameters indicates the type of the CSI report, and the at least one of the one or more parameters indicates the AI model associated with the CSI report. The at least one parameter indicating the type of the CSI report further indicates other information of the CSI report. The at least one parameter indicating the AI model associated with the CSI report further indicates other information of the CSI report. The at least one parameter indicating the type of the CSI report is completely different from or partially the same as the at least one parameter indicating the AI model associated with the CSI report.

A combination of Manner 1 and Manner 4 is used as an example. For example, the priority of the CSI report is determined based on one or more parameters, at least one of the one or more parameters indicates the type of the CSI report, and the at least one of the one or more parameters indicates the AI model associated with the CSI report. The at least one parameter indicating the type of the CSI report further indicates other information of the CSI report. The at least one parameter indicating the AI model associated with the CSI report does not indicate other information of the CSI report. The at least one parameter indicating the type of the CSI report is completely different from the at least one parameter indicating the AI model associated with the CSI report.

A combination of Manner 2 and Manner 3 is used as an example. For example, the priority of the CSI report is determined based on one or more parameters, at least one of the one or more parameters indicates the type of the CSI report, and the at least one of the one or more parameters indicates the AI model associated with the CSI report. The at least one parameter indicating the type of the CSI report does not indicate other information of the CSI report. The at least one parameter indicating the AI model associated with the CSI report further indicates other information of the CSI report. The at least one parameter indicating the type of the CSI report is completely different from the at least one parameter indicating the AI model associated with the CSI report.

A combination of Manner 2 and Manner 4 is used as an example. For example, the priority of the CSI report is determined based on one or more parameters, at least one of the one or more parameters indicates the type of the CSI report, and the at least one of the one or more parameters indicates the AI model associated with the CSI report. The at least one parameter indicating the type of the CSI report does not indicate other information of the CSI report. The at least one parameter indicating the AI model associated with the CSI report does not indicate other information of the CSI report. The at least one parameter indicating the type of the CSI report is completely different from the at least one parameter indicating the AI model associated with the CSI report.

It should be understood that the foregoing is merely an example. The priority of the CSI report may be determined in another combination of Manner 1 to Manner 4. This is not limited in embodiments of this application.

One CSI report may be divided into part 1 and part 2, or may be used as a whole, that is, is not divided. A CSI report that is not divided into part 1 or part 2 may be considered as that all of the CSI report are part 1 or part 2.

The CSI report may be carried on a PUSCH, or may be carried on a PUCCH. Alternatively, a part of the CSI report may be carried on a PUSCH, and the other part of the CSI report may be carried on a PUCCH. For example, part 1 is carried on the PUCCH, and part 2 is carried on the PUSCH.

For example, a CSI report based on AI model inference may be divided into part 1 and part 2. Report content of part 1 may indicate one or more of an RI, a CQI, an ID of an AI model, an original total size of the CSI report, an actual total size of the CSI report, an original size of part 2, an actual size of part 2, an original size of CSI at each layer, an actual size of CSI at each layer, or the like. The size may be represented by a quantity of bits. Report content of part 2 may indicate an AI-PMI. The original size is a size before discarding, and the actual size is an actual size for sending. The CSI report is used as an example. The original total size of the CSI report is a size of the CSI report before discarding, and the actual total size of the CSI report is a size of report content that is in the CSI report and that is actually sent to the network device.

For example, the CSI report for data collection may be divided into part 1 and part 2. Report content of part 1 may indicate one or more of a quantization mode of the data-CSI, a codebook parameter, a CSI information type, a quantity of non-zero coefficients, or the like. The quantization mode of the data-CSI may include W-bit scalar quantization, float16 quantization, or the like. Report content of part 2 may indicate the data-CSI. The float16 quantization means that a floating point number is quantized by using 16 bits (bits). W is a positive integer. For example, W may be any integer in a range of [1, 8].

For example, the CSI report for performance monitoring may be divided into part 1 and part 2. Report content of part 1 may indicate the overall accuracy of the recovered CSI information. The overall accuracy of the recovered CSI information may be determined based on accuracy that is of each layer and/or each subband and that is in the recovered CSI information. For example, the overall accuracy of the recovered CSI information may be represented as an average value of SGCSs between recovered information of each layer and/or each subband and raw information of each layer and/or each subband. Report content of part 2 may indicate accuracy that is of recovered information of each layer and/or each subband and that is in the recovered CSI information.

As described above, the CSI report for performance monitoring is generally small, and the CSI report for performance monitoring may not be divided. In other words, the CSI report for performance monitoring may be considered as a whole as part 1 or part 2 of the CSI report.

Part 2 may be divided into multiple groups.

A CSI feedback mode based on an R16 codebook is used as an example. Part 2 of a CSI report may be divided into three groups. In descending order of priorities, the three groups are respectively group (group) 0, group 1, and group 2. Group 0 includes oversampling selection (or phase rotation selection), a space domain basis indication, and a strongest coefficient indication; group 1 includes a frequency domain basis indication, a part of coefficient indications, and a part of coefficient amplitudes and phases; and group 2 includes remaining coefficient indications, and remaining coefficient amplitudes and phases.

It should be understood that the foregoing is merely an example, and a quantity of groups obtained by dividing part 2 may be 3, or may be another value. This is not limited in embodiments of this application.

Part 2 may not be divided into groups, in other words, part 2 may be considered as a whole as a group.

Part 1 is generally not divided into groups, in other words, part 1 is considered as a whole as a group. Part 1 may alternatively be divided into groups. This is not limited in embodiments of this application.

As described above, one of the N CSI reports may include one of the p groups.

For example, part 2 of a CSI report may not be divided, and part 2 may be used as one of the p groups that is included in the CSI report. For another example, a CSI report may not be divided, and the CSI report may be used as one of the p groups that is included in the CSI report. For another example, part 2 of a CSI report may be divided into group 0, group 1, and group 2. Any one of group 0, group 1, and group 2 may be used as one group of the p groups that is included in the CSI report.

Alternatively, one of the N CSI reports may include multiple groups in the p groups.

For example, a CSI report may be divided into part 1 and part 2, and part 1 and part 2 may be used as two of the p groups that are included in the CSI report. For another example, part 2 of a CSI report may be divided into group 0, group 1, and group 2. Any plurality of groups of group 0, group 1, and group 2 may be used as multiple groups that are in the p groups and that are included in the CSI report.

When a CSI report includes multiple groups, priorities of the groups may be determined in multiple manners.

For example, for a same CSI report, a priority of part 1 may be higher than a priority of part 2.

For example, part 2 of a CSI report may be divided into $N_g$+1 groups, and priorities of the groups in descending order are sequentially: group 0, group 1, ..., and group $N_g$. $N_g$ is a non-negative integer.

If part 2 is not divided, part 2 may be used as any one of the foregoing groups as needed.

For ease of description, the order is only used as an example for description in this embodiment of this application, and does not constitute any limitation on the scope of this embodiment of this application.

For different CSI reports, values of $N_g$ may be the same or may be different.

Whether the N CSI reports are to be divided and a specific division manner may be independent of each other.

Optionally, the N CSI reports include a first CSI report, and a type of the first CSI report is the first CSI report type. The first CSI report includes multiple groups in the p groups.

The first CSI report may be any one of the N CSI reports.

The type of the first CSI report is the first CSI report type, that is, report content of the first CSI report includes the channel information obtained through inference by the AI model. The first CSI report is a CSI report based on AI model inference.

For example, N=1. In this case, priorities of the multiple groups may be based on priorities of the multiple groups in the first CSI report.

For example, N>1. In this case, priorities of the multiple groups may be based on a priority of the first CSI report and priorities of the multiple groups in the first CSI report.

For example, the multiple groups include p1 groups. Priorities of the p1 groups in the p groups are based on a priority of the first CSI report in the N CSI reports and priorities of the p1 groups in the first CSI report. p1 is an integer greater than 1.

In this embodiment of this application, the first CSI report may be divided into multiple groups, so that information sending flexibility can be improved, to increase a probability that the network device obtains a group in the first CSI report. This helps the network device obtain partial information in the CSI report. For example, the first CSI report is divided into multiple groups, and the groups correspond to different priorities. When the first resource cannot carry the p groups, even if the whole first CSI report cannot be sent, a probability that the network device obtains a part of groups in the first CSI report can be increased. This helps the network device obtain partial information in the CSI report.

The following describes priorities in the CSI report based on AI model inference with reference to Example 1 to Example 3.

Example 1:

Optionally, the channel information obtained through inference by the AI model includes channel information of multiple layers, the p1 groups each include channel information of at least one of the multiple layers, and the priorities of the p1 groups in the first CSI report match priorities of the channel information of the at least one layer in the p1 groups.

The priority of the channel information of the at least one layer is a priority of the channel information of the at least one layer in the channel information of the multiple layers.

For example, the priority of the channel information of the at least one layer is related to an index of the at least one layer.

In other words, for the CSI report based on AI model inference, priorities of the channel information obtained through inference by the AI model may be classified based on layers. A priority of channel information of a layer is related to an index of the layer. In this embodiment of this application, a priority of channel information of a layer may also be referred to as a priority of the layer.

For example, a smaller index of a layer indicates a higher priority of channel information of the layer. In this case, channel information of layer 1 has a highest priority.

For another example, a larger index of a layer indicates a higher priority of channel information of the layer. In this case, channel information of layer 1 has a lowest priority.

For example, priorities of channel information of layers or indexes of layers are related to eigenvalues or singular values corresponding to eigenvectors of the layers. The priorities of the channel information of the layers or the indexes of the layers are sorted in ascending order of the eigenvalues or the singular values corresponding to the eigenvectors of the layers, or the priorities of the channel information of the layers or the indexes of the layers are sorted in descending order of the eigenvalues or the singular values corresponding to the eigenvectors of the layers. Alternatively, the index of the layer may be determined in another manner.

In this embodiment of this application, priorities of the channel information obtained through AI inference may be classified based on layers, and a priority of channel information of a layer matches a priority of a group to which the layer belongs in the first CSI report. Beamforming gains of different layers may be different. Generally, a larger eigenvalue or singular value corresponding to an eigenvector of a layer indicates a larger beamforming gain of the layer. Therefore, beamforming gains of different layers can be distinguished through priority classification based on layers. This helps implement priority classification based on different beamforming gains. For example, a layer with a larger beamforming gain may be used as a higher-priority layer, and the higher-priority layer belongs to a higher-priority group. In this way, it can be preferentially ensured that this part of CSI can be fed back. In other words, a probability that the network device obtains channel information of the layer with the larger beamforming gain is increased. For example, indexes of layers may be arranged in descending order of eigenvalues or singular values corresponding to eigenvectors of the layers. A smaller index of a layer indicates a higher priority of channel information of the layer. In this way, a layer with a larger beamforming gain can be used as a higher-priority layer.

In addition, sparseness of eigenvectors of different layers may be different, that is, feedback precision may be different. Generally, a larger eigenvalue or singular value corresponding to an eigenvector of a layer indicates stronger sparseness of the eigenvector of the layer, that is, higher feedback precision in the case of same feedback overheads. Therefore, feedback precision of different layers can be distinguished through priority classification based on layers. This helps implement priority classification based on different feedback precision. For example, a layer with higher feedback precision may be used as a higher-priority layer, and the higher-priority layer belongs to a higher-priority group. In this way, it can be preferentially ensured that this part of CSI can be fed back. In other words, a probability that the network device obtains channel information of the layer with the higher feedback precision is increased. For example, indexes of layers may be arranged in descending order of eigenvalues or singular values corresponding to eigenvectors of the layers. A smaller index of a layer indicates a higher priority of channel information of the layer. In this way, a layer with higher feedback precision may be used as a higher-priority layer.

In this case, the CSI information obtained through inference by the AI model may comprise channel information corresponding to different layers. The CSI information obtained through inference by the AI model is a string of bits output by the AI model. For example, a correspondence between the channel information of the layers and the bits output by the AI model may be preset. For example, the AI model outputs 20 bits, the channel information of the multiple layers is AI-PMIs of two layers, the first 10 bits are an AI-PMI of layer 1, and the last 10 bits are an AI-PMI of layer 2.

That the priorities of the p1 groups in the first CSI report match the priorities of the channel information of the at least one layer included in the p1 groups may be understood in the following manner. In the p1 groups, a priority of group #1 is higher than a priority of group #2, and a priority of channel information of at least one layer included in group #1 is higher than a priority of channel information of at least one layer included in group #2. For example, a smaller index of a layer indicates a higher priority of channel information of the layer. In this case, the priority of group #1 is higher than the priority of group #2, and an index of the at least one layer included in group #1 is less than an index of the at least one layer included in group #2.

It should be noted that, in this embodiment of this application, the p1 groups may be all or a part of the groups of the CSI report. For example, in all the groups of the CSI report, a part of groups include channel information of layers, the part of groups are the p1 groups described above, and the other groups do not include channel information of layers. Alternatively, in all the groups of the CSI report, each group includes channel information of a layer, and all the groups are the p1 groups described above. This is not limited in embodiments of this application.

The following uses an example in which the channel information obtained through inference by the AI model is an AI-PMI for description. The channel information of the multiple layers is AI-PMIs of the multiple layers. For example, report content of part 2 may indicate the AI-PMIs, and part 2 may be divided into three groups, that is, p1=3. In descending order of priorities, the three groups are respectively group 0, group 1, and group 2. A smaller index of a layer indicates a higher priority of the layer.

For example, group 0 includes an AI-PMI of layer 1, group 1 includes an AI-PMI of layer 2, and group 2 includes AI-PMIs of remaining layers.

For another example, group 0 includes an AI-PMI of layer 1, group 1 includes an AI-PMI of layer 2 and an AI-PMI of layer 3, and group 2 includes AI-PMIs of remaining layers.

For another example, group 1 includes an AI-PMI of layer 1, and group 2 includes AI-PMIs of remaining layers.

It should be understood that the foregoing is merely an example, and there may be another correspondence between layers and groups. This does not constitute any limitation on the solutions in embodiments of this application.

Example 2:

Optionally, the channel information obtained through inference by the AI model includes channel information of multiple segments. The p1 groups each include channel information of at least one of the multiple segments, and the priorities of the p1 groups in the first CSI report match priorities of the channel information of the at least one segment in the p1 groups.

The priority of the channel information of the at least one segment is a priority of the channel information of the at least one segment in the channel information of the multiple segments.

For example, a priority of channel information of a segment is related to an index of the segment.

In other words, for the CSI report based on AI model inference, priorities of the channel information obtained through inference by the AI model may be classified based on segments. The channel information obtained through inference by the AI model may be divided into the channel information of the multiple segments, and the priorities of the channel information of the segments are related to indexes of the segments. In this embodiment of this application, a priority of channel information of a segment may also be referred to as a priority of the segment.

For example, a smaller index of a segment indicates a higher priority of channel information of the segment.

For another example, a larger index of a segment indicates a higher priority of channel information of the segment.

When the AI model supports segmentation, priorities can be classified based on segments.

For example, CSI feedback information (for example, an AI-PMI) generated by the CSI generator is divided into multiple segments, and the segments are input into the CSI reconstructor, so that the CSI reconstructor can reconstruct recovered CSI information. Compared with recovered CSI information reconstructed based on the complete CSI feedback information, the recovered CSI information reconstructed based on the segments may have lower precision. For example, the CSI generator outputs 20 bits, segment 1 includes the first 10 bits, and segment 2 includes the last 10 bits. The CSI reconstructor can reconstruct recovered CSI information based on the first 10 bits. Compared with recovered CSI information reconstructed based on the 20 bits, the recovered CSI information reconstructed based on the first 10 bits has lower precision.

If the CSI reconstructor can reconstruct the recovered CSI information based on the segments, it may be considered that the AI model supports segmentation. If the CSI reconstructor can reconstruct the recovered CSI information based only on the complete CSI feedback information, and cannot reconstruct the recovered CSI information based on the segments, it may be considered that the AI model does not support segmentation.

For example, a priority of channel information of a segment or an index of a segment is related to whether CSI can be independently recovered based on the segment. The following uses an example in which a smaller index of a segment indicates a higher priority of channel information of the segment for description. A segment based on which CSI can be independently recovered has channel information with a highest priority or has a lowest segment index. For example, the channel information obtained through inference by the AI model is divided into three segments, where a first segment may be used to independently recover the CSI, a second segment and the first segment may be jointly used to recover the CSI, and a third segment, the first segment, and the second segment may be jointly used to recover the CSI. In this case, the first segment has a highest priority or a lowest index, the second segment has a second highest priority or a second lowest index, and the third segment has a lowest priority or a highest index.

In this embodiment of this application, priority classification is performed based on segments, so that a segment based on which CSI can be independently recovered has a higher priority, and the higher-priority segment belongs to a higher-priority group. In this way, it can be preferentially ensured that this part of CSI can be fed back. In other words, a probability that the network device obtains the segment based on which the CSI can be independently recovered is increased. This helps the network device recover the CSI. In this way, even if the whole first CSI report cannot be sent, a probability that the network device obtains a higher-priority group can be increased. Even if a segment with a low priority is discarded, the network device can still recover the CSI based on a remaining segment with a high priority.

That the priorities of the p1 groups in the first CSI report match the priorities of the channel information of the at least one segment in the p1 groups may be understood in the following manner. In the p1 groups, a priority of group #1 is higher than a priority of group #2, and a priority of channel information of at least one segment included in group #1 is higher than a priority of channel information of at least one segment included in group #2. For example, a smaller index of a segment indicates a higher priority of channel information of the segment. In this case, the priority of group #1 is higher than the priority of group #2, and an index of the at least one segment included in group #1 is less than an index of the at least one segment included in group #2.

It should be noted that, in this embodiment of this application, the p1 groups may be all or a part of the groups of the CSI report. For example, in all the groups of the CSI report, a part of groups include channel information of segments, the part of groups are the p1 groups described above, and the other groups do not include channel information of segments. Alternatively, in all the groups of the CSI report, each group includes channel information of a segment, and all the groups are the p1 groups described above. This is not limited in embodiments of this application.

The following uses an example in which the channel information obtained through inference by the AI model is an AI-PMI for description. The channel information of the multiple segments is AI-PMIs of the multiple segments. For example, report content of part 2 may indicate the AI-PMIs, and part 2 may be divided into three groups, that is, p1=3. In descending order of priorities, the three groups are respectively group 0, group 1, and group 2. A smaller index of a segment indicates a higher priority of the segment.

For example, group 0 includes an AI-PMI of segment 1, group 1 includes an AI-PMI of segment 2, and group 2 includes AI-PMIs of remaining segments.

For another example, group 0 includes an AI-PMI of segment 1 and an AI-PMI of segment 2, group 1 includes an AI-PMI of segment 3 and an AI-PMI of segment 4, and group 2 includes AI-PMIs of remaining segments.

For another example, group 1 includes an AI-PMI of segment 1, and group 2 includes AI-PMIs of remaining segments.

It should be understood that the foregoing is merely an example, and there may be another correspondence between segments and groups. This does not constitute any limitation on the solutions in embodiments of this application.

A quantity of segments, a quantity of bits included in each segment, bits included in each segment, and a correspondence between segments and groups may be predefined, or may be configured by the network device, or may be partially configured by the network device and partially predefined. Alternatively, a part or all of the foregoing information may be determined by the terminal device, and the terminal device may report related information to the network device. For example, the terminal device may report, to the network device, a quantity of segments supported by each AI model on a terminal device side, a quantity of bits included in each segment, and bits included in each segment. The bits included in each segment indicate bits that are included in the segment.

Example 3:

Optionally, the channel information obtained through inference by the AI model includes channel information of multiple segments. The p1 groups each include channel information of at least one of the multiple segments, and the priorities of the p1 groups in the first CSI report match priorities of the channel information of the at least one segment in the p1 groups. The priority of the at least one segment is related to a layer at which the at least one segment is located and a location of the at least one segment at the layer.

A difference between Example 3 and Example 2 lies in that, in Example 2, the channel information obtained through inference by the AI model is segmented as a whole, each segment may include multiple layers, and a priority of each segment is unrelated to the layers. Example 3 may be understood as follows: The channel information obtained through inference by the AI model includes channel information of multiple layers. A part or all of the layers are segmented to obtain the channel information of the multiple segments. A priority of a segment is related to a layer at which the segment is located and a location of the segment at the layer. For other descriptions, refer to Example 2. To avoid repetition, partial descriptions are appropriately omitted when Example 3 is described.

In Example 3, quantities of segments of the layers may be the same or may be different. For a layer that is not segmented, a quantity of segments of the layer may be considered as 1. Quantities of bits included in segments of each layer may be the same or may be different. Bits included in segments of each layer may be the same or may be different.

A quantity of segments obtained by dividing each layer, a quantity of bits included in each segment of each layer, bits included in each segment of each layer, a correspondence between segments of each layer and groups, and the like may be predefined, or may be configured by the network device, or may be partially configured by the network device and partially predefined. Alternatively, a part or all of the foregoing information may be determined by the terminal device, and the terminal device may report related information to the network device. For example, the terminal device may report, to the network device, a quantity of bits included in each segment of each layer and bits included in each segment of each layer. The bits included in each segment of each layer indicate bits that are included in the segment of the layer.

For example, a priority of channel information of a segment is related to an index of the segment.

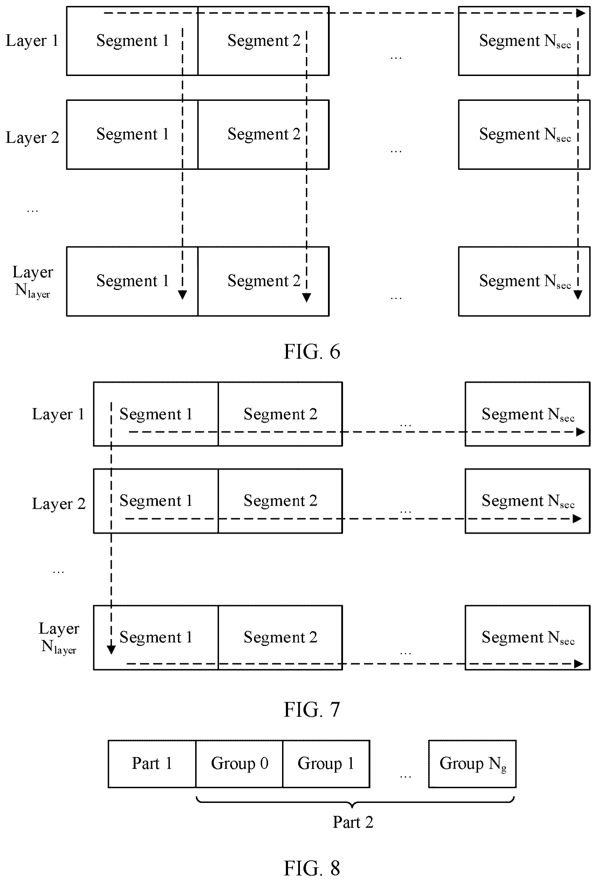

FIG. 6 is a diagram of a manner of determining a priority of a segment.

For example, as shown in FIG. 6, a priority may be determined in a manner of first segmenting and then layering. In other words, a priority of each segment is adjacent to a priority of an adjacent segment at a layer at which the segment is located.

For example, the priority *pri(i, j)* of the segment may satisfy the following formula:

$$pri(i, j) = N_{layer} \cdot i + j$$

i indicates an index of the segment at the layer, that is, indicates a location of the segment at the layer. j indicates an index of the layer at which the segment is located, that is, indicates the layer at which the segment is located. $N_{layer}$ indicates a total quantity of layers.

FIG. 7 is a diagram of another manner of determining a priority of a segment.

For example, as shown in FIG. 7, the priority may be determined in a manner of first layering and then segmenting. For a segment, a segment whose priority is adjacent to a priority of the segment is a segment that is at an adjacent layer and that is at a same location as the segment at a layer at which the segment is located.

For example, the priority *pri(i, j)* of the segment may satisfy the following formula:

$$pri(i, j) = N_{sec} \cdot j + i$$

i indicates an index of the segment at the layer, that is, indicates a location of the segment at the layer. j indicates an index of the layer at which the segment is located, that is, indicates the layer at which the segment is located. $N_{sec}$ indicates a quantity of segments in each layer.

It should be understood that, in FIG. 6 and FIG. 7, only an example in which each layer is divided into $N_{sec}$ segments is used, and does not constitute any limitation on the solutions in embodiments of this application.

For example, a smaller value of *pri(i, j)* indicates a higher priority of the segment.

For example, a larger value of *pri(i, j)* indicates a higher priority of the segment.

That the priorities of the p1 groups in the first CSI report match the priorities of the channel information of the at least one segment in the p1 groups may be understood in the following manner. In the p1 groups, a priority of group #1 is higher than a priority of group #2, and a priority of channel information of at least one segment included in group #1 is higher than a priority of channel information of at least one segment included in group #2.

For example, part 2 may be divided into three groups, that is, p1=3. In descending order of priorities, the three groups are respectively group 0, group 1, and group 2.

For example, group 0 includes the first a segments with highest priorities, group 1 includes b segments with highest priorities after the first a segments, and group 2 includes remaining segments. a is a positive integer, and b is a positive integer.

For another example, group 1 includes the first c segments with highest priorities, and group 2 includes AI-PMIs of remaining segments. c is a positive integer.

It should be understood that the foregoing is merely an example, and there may be another correspondence between segments and groups. This does not constitute any limitation on the solutions in embodiments of this application.

In the foregoing three examples, the group may further include other information.

For example, in the multiple groups that are in the p groups and that are included in the first CSI report, a group with a highest priority may further include auxiliary information, for example, indicating one or more pieces of content of the ID of the AI model, an original total size of an AI-PMI, an actual total size of the AI-PMI, an original size of an AI-PMI of each layer, and an actual size of an AI-PMI of each layer.

For example, in the multiple groups that are in the p groups and that are included in the first CSI report, group 0 may be a group with a highest priority, and group 0 may include the auxiliary information.

Optionally, the N CSI reports include a second CSI report, and a type of the second CSI report is the second CSI report type. The second CSI report includes multiple groups in the p groups.

The second CSI report may be any one of the N CSI reports.

The type of the second CSI report is the second CSI report type, that is, report content of the second CSI report includes the performance information of the AI model. The second CSI report is a CSI report for performance monitoring.

For example, N=1. In this case, priorities of the multiple groups may be based on priorities of the multiple groups in the second CSI report.

For example, N>1. In this case, priorities of the multiple groups may be based on a priority of the second CSI report and priorities of the multiple groups in the second CSI report.

For example, the multiple groups include p2 groups. Priorities of the p2 groups in the p groups are based on a priority of the first CSI report in the N CSI reports and priorities of the p2 groups in the second CSI report. p2 is an integer greater than 1.

Optionally, the performance information of the AI model includes overall performance information, performance information of the multiple layers, or performance information of multiple subbands, the p2 groups each include at least one piece of performance information in the performance information of the AI model, and the priorities of the p2 groups in the second CSI report match priorities of the at least one piece of performance information in the p2 groups.

The priority of the at least one piece of performance information is a priority of the at least one piece of performance information in the multiple pieces of performance information.

The following uses an example in which the performance information of the AI model is the accuracy of the recovered CSI information, to describe the overall performance information, the performance information of the multiple layers, and the performance information of the multiple subbands.

For example, the overall performance information may be overall accuracy of the recovered CSI information. The performance information of the layer may be accuracy of recovered information of the layer. The performance information of the subband may be accuracy of recovered information of the subband. For example, the accuracy may be represented as an SGCS between recovered information and raw information. The performance information of the layer may be an SGCS between the recovered CSI information of the layer and raw CSI information of the layer. The overall accuracy of the recovered CSI information may be determined based on accuracy that is of each layer and/or each subband and that is in the recovered CSI information. For example, the overall performance information may be an average value of SGCSs of each layer and/or each subband. The performance information of the subband may be an SGCS between the recovered CSI information of the subband and raw CSI information of the subband.

For related descriptions of the performance information of the AI model, refer to the foregoing descriptions. Details are not described herein again.

Optionally, when the AI performance information includes the overall performance information, a priority of the overall performance information may be a highest priority of performance information in the AI performance information.

Optionally, the AI performance information may include the overall performance information and the performance information of the multiple layers, and a priority of the overall performance information is higher than priorities of the performance information of the multiple layers.

Optionally, the AI performance information may include the overall performance information and the performance information of the multiple subbands, and the priority of the overall performance information is higher than priorities of the performance information of the multiple subbands.

Priorities of performance of the layers or the subbands may be determined in an order of first layers and then subbands. To be specific, for a subband, a subband whose priority is adjacent to a priority of the subband is a subband that is at an adjacent layer and that is at a same location as the subband at a layer at which the subband is located.

Alternatively, priorities of performance of the layers or the subbands may be determined in an order of first subbands and then layers. To be specific, a priority of each subband is adjacent to a priority of an adjacent subband at a layer at which the subband is located.

For detailed descriptions, refer to Example 3 above. The channel information of the segment needs to be replaced with the performance information of the subband. To avoid repetition, details are not described herein again.

It should be noted that, in this embodiment of this application, the p2 groups may be all or a part of the groups of the CSI report. For example, in all the groups of the CSI report, a part of groups include performance information, the part of groups are the p2 groups described above, and the other groups do not include performance information. Alternatively, in all the groups of the CSI report, each group includes performance information, and all the groups are the p2 groups described above. This is not limited in embodiments of this application.

That the priorities of the p2 groups in the second CSI report match the priorities of the at least one piece of performance information included in the p2 groups may be understood in the following manner. In the p2 groups, a priority of group #3 is higher than a priority of group #4, and a priority of at least one piece of performance information included in group #3 is higher than a priority of at least one piece of performance information included in group #4.

For example, the performance information of the AI model may be placed in part 2 of the second CSI report, and part 2 of the second CSI report may be divided into three groups, that is, p2=3. In descending order of priorities, the three groups are respectively group 0, group 1, and group 2. A smaller index of a layer indicates a higher priority of the layer.

For example, group 0 includes overall performance, group 1 includes performance of a part of layers or subbands, and group 2 includes performance of remaining layers or subbands. For example, each layer includes five subbands, and there are two layers in total. In this case, the performance information of the AI model may include overall performance and performance of 10 subbands, group 0 includes the overall performance, group 1 may include performance of the first four subbands with highest priorities, and group 2 includes performance of remaining six subbands.

It should be understood that the foregoing is merely an example, and there may be another correspondence between performance information and groups. This does not constitute any limitation on the solutions in embodiments of this application.

Optionally, at least two of the N CSI reports have a same priority.

For example, the priority setting manner may be applied to a scenario in which multiple CSI reports need to be used together. The scenario in which the multiple CSI reports need to be used together may be a scenario in which the multiple CSI reports need to exist together to be valid.

For example, the multiple CSI reports with the same priority may be used in a scenario in which performance is monitored. For example, the multiple CSI reports with the same priority may include a CSI report based on AI model inference and a CSI report in the conventional feedback mode (for example, the codebook-based feedback mode). The network device may compare accuracy of channel information that is fed back by using the two CSI reports to evaluate performance of the AI model.

For multiple CSI reports with a same priority, when the multiple CSI reports need to be discarded, the multiple CSI reports may be discarded simultaneously, or a part of groups with a same priority are discarded based on priorities in the multiple CSI reports. In step 520, determining the part of groups from the p groups may also be understood as discarding the other groups from the p groups.

For example, the priorities of the N CSI reports may be determined by the terminal device.

Optionally, the method 500 further includes: receiving first indication information from the network device, where the first indication information indicates priorities of a part or all of the N CSI reports.

In other words, the priorities of the part or all of the N CSI reports may be dynamically configured or adjusted by the network device.

For example, the network device may determine the priorities of the part or all of the N CSI reports in the manner described above.

For example, the network device may dynamically configure or adjust the priority of the CSI report by using one or more of RRC signaling, a MAC CE, or DCI.

In other words, the first indication information may be carried in one or more of the RRC signaling, the MAC CE, or the DCI.

For example, the network device may configure, in RRC signaling for configuring the CSI report, the priority of the CSI report.

For another example, the network device may configure, in a MAC CE for activating the CSI report, the priority of the CSI report.

For another example, the network device may configure or adjust, in DCI, priorities of one or more reports.

In this way, the priority of the CSI report can be controlled more flexibly, to facilitate adjustment based on an actual requirement.

For example, the network device may configure a same priority for the multiple CSI reports. For detailed descriptions, refer to the foregoing descriptions. Details are not described herein again.

The following uses an example in which part 2 of each CSI report is divided into $N_g+1$ groups to describe priorities of groups of parts 2 of the N CSI reports. For example, in part 2 of each CSI report, priorities in descending order are sequentially: group 0, group 1, ..., and group $N_g$. $N_g$ is an integer greater than or equal to 0. The priorities of the N CSI reports in descending order are sequentially: CSI report 1, CSI report 2, ..., and CSI report N. A process of determining numbers 1 to N is a process of determining the priorities of the N CSI reports. For a determining manner, refer to Manner 1 and Manner 2 above. Details are not described herein again.

For example, the priorities of the groups of parts 2 of the N CSI reports in descending order may be: groups 0 of CSI report 1 to CSI report N, group 1 of CSI report 1, group 2 of CSI report 1, ..., group $N_g$ of CSI report 1, group 1 of CSI report 2, group 2 of CSI report 2, ..., group $N_g$ of CSI report 2, ..., group 1 of CSI report N, group 2 of CSI report N, and group $N_g$ of CSI report N.

Groups 0 of CSI report 1 to CSI report N are group 0 of CSI report 1, group 0 of CSI report 2, ..., and group 0 of CSI report N. Groups 0 of CSI report 1 to CSI report N may have a same priority. Alternatively, groups 0 of CSI report 1 to CSI report N may have N different priorities, and may be: group 0 of CSI report 1, group 0 of CSI report 2, ..., and group 0 of CSI report N in descending order of the priorities.

For example, $N_g=3$, and the priorities of the groups of parts 2 of the N CSI reports in descending order may be: groups 0 of CSI report 1 to CSI report N, group 1 of CSI report 1, group 2 of CSI report 1, group 3 of CSI report 1, group 1 of CSI report 2, group 2 of CSI report 2, group 3 of CSI report 2, ..., group 1 of CSI report N, group 2 of CSI report N, and group 3 of CSI report N.

For example, the priorities of the groups of parts 2 of the N CSI reports in descending order may be: groups 0 of CSI report 1 to CSI report N, group 1 of CSI report 1, group 2 of CSI report 1, ..., group $N_g$-1 of CSI report 1, group 1 of CSI report 2, group 2 of CSI report 2, ..., group $N_g$-1 of CSI report 2, group 1 of CSI report N, group 2 of CSI report N, ..., group $N_g$-1 of CSI report N, and groups $N_g$ of CSI report 1 to CSI report N.

For related descriptions of groups 0 of CSI report 1 to CSI report N, refer to the foregoing descriptions.

Groups $N_g$ of CSI report 1 to CSI report N are group $N_g$ of CSI report 1, group $N_g$ of CSI report 2, ..., and group $N_g$ of CSI report N. Groups $N_g$ of CSI report 1 to CSI report N may have a same priority. Alternatively, groups $N_g$ of CSI report 1 to CSI report N may have N different priorities, and may be: group $N_g$ of CSI report 1, group $N_g$ of CSI report 2, ..., and group $N_g$ of CSI report N in descending order of the priorities.

For example, $N_g=3$, and the priorities of the groups of parts 2 of the N CSI reports in descending order may be:

groups 0 of CSI report 1 to CSI report N, group 1 of CSI report 1, group 2 of CSI report 1, group 1 of CSI report 2, group 2 of CSI report 2, ..., group 1 of CSI report N, group 2 of CSI report N, and groups 3 of CSI report 1 to CSI report N.

It should be understood that the foregoing is merely an example, and the priorities of the groups of parts 2 of the N CSI reports may alternatively be in another order.

In the foregoing example, it is not limited that each CSI report needs to be divided into part 1 and part 2, and it is not limited that part 2 of each CSI report needs to be divided into $N_g$+1 groups.

For example, if a CSI report is not divided into part 1 or part 2, the CSI report may be considered as a whole as part 1 or part 2.

For example, if part 2 of a CSI report is not divided into multiple groups, part 2 of the CSI report may be considered as a whole as a group.

The sorting of the priorities of the groups of parts 2 of the N CSI reports may also be applicable to a case in which part 2 of a CSI report is considered as a whole as a group, and only other groups of part 2 of the CSI report need to be deleted from the sorting. For example, part 2 of CSI report 3 may be considered as group 0 of CSI report 3. In this case, group 1 to group $N_g$ of CSI report 3 in the foregoing sorting may be deleted. The remaining sorting may be used as sorting of the priorities of the groups of parts 2 of the N CSI reports.

As described above, in step 520, the part of groups to be transmitted on the first resource may be determined from the p groups based on the priorities of the p groups.

In other words, unselected groups are discarded from the p groups based on the priorities of the p groups. In this embodiment of this application, discarding may be performed in a unit of a group in the p groups.

For example, a third CSI report in the N CSI reports includes one of the p groups.

The third CSI report may be any one of the N CSI reports.

In other words, in the p groups, a part of CSI reports include only one group.

For example, for one of the N CSI reports, if the CSI report is not divided into part 1 or part 2, the CSI report may be used as a whole as part 1 or part 2, that is, as a whole as one of the p groups. If the group needs to be discarded, the whole CSI report is discarded. If the group needs to be reported, the whole CSI report is reported.

For another example, for one of the N CSI reports, if part 2 of the CSI report is not divided into multiple groups, part 2 of the CSI report may be considered as a whole as one of the p groups. If the group needs to be discarded, whole part 2 of the CSI report is discarded. If the group needs to be reported, whole part 2 of the CSI report is reported.

According to the solutions in this embodiment of this application, for some information having a high integrity requirement, if a part of the information is discarded, subsequent configuration may be affected. The information having the high integrity requirement may be used as one of the p groups. In this way, all of the information having the high integrity requirement may be discarded or uploaded. For example, the information having the high integrity requirement may be located in a CSI report, and the CSI report may not be divided into part 1 and part 2. Alternatively, the information having the high integrity requirement may be located in part 2 of the CSI report, and part 2 may not be divided into groups.

The CSI report for data collection is used as an example. If partial information in the data-CSI is discarded, precision of the data-CSI is reduced, and accuracy of the operation related to the AI model is affected. For example, training performance of the AI model or a performance monitoring result of the AI model is affected. The CSI report for data collection may not be divided into part 1 and part 2. Alternatively, the CSI report for data collection may be divided into part 1 and part 2, the data-CSI may be located in part 2, and part 2 is not divided into multiple groups.

For example, in step 520, the part of groups of the p groups may be sent on the first resource based on the priorities of the p groups, where a total size of the part of groups is less than or equal to a specified threshold. The specified threshold may be a size of a resource that is in the first resource and that can be used to perform transmission of the CSI report.

When the total size of the p groups exceeds the specified threshold, the terminal device may sequentially discard groups with lowest priorities in the p groups until the total size of the part of groups whose transmission needs to be performed on the first resource is less than or equal to the specified threshold.

As described above, in step 520, the part or all of the p groups may be sorted based on the priorities of the p groups. In other words, step 510 may be replaced with obtaining a CSI report to be transmitted on the first resource, where the CSI report includes all or part of the N CSI reports; and step 520 may be replaced with sending the obtained CSI report on the first resource, where a sending format of the obtained CSI report meets descriptions in the following embodiments.

The following describes a format of the CSI report by using examples.

For example, the p groups are sorted from front to back in descending order of the priorities of the p groups.

For example, in any two of the N CSI reports, a priority of each group in a lower-priority CSI report is lower than a priority of a corresponding group in a higher-priority CSI report. For example, the N CSI reports include CSI report #1 and CSI report #2. CSI report #1 includes p1 groups, the p1 groups include group p1-1 and group p1-2, CSI report #2 includes p1' groups, and the p1' groups include group p1'-1 and group p1'-2. A priority of group p1-1 is higher than a priority of group p1-2, a priority of group p1'-1 is higher than a priority of group p1'-2, the priority of group p1-1 is higher than the priority of group p1'-1, the priority of group p1'-1 is higher than the priority of group p1-2, and the priority of group p1-2 is higher than the priority of group p1'-2.

Groups with a same priority in the two CSI reports are groups having a correspondence.

In other words, during determining of priorities, priorities of groups are first considered, and then priorities of the CSI reports to which the groups having a correspondence belong are considered.

The following describes the format of the CSI report when N=1 by using examples.

For example, the p groups may include part 1 and $N_g$+1 groups of part 2 that are of the CSI report. In other words, p= $N_g$+2. A priority of part 1 is higher than a priority of part 2. Part 2 may be divided into the N +1 groups, and priorities of the groups in descending order are sequentially: group 0, group 1, ..., and group $N_g$.

An internal structure of the CSI report is shown in FIG. 8, and is sequentially part 1, group 0, group 1, ..., and group $N_g$ from front to back.

It should be understood that FIG. 8 is merely an example, and does not constitute any limitation on the solutions in embodiments of this application. Channel coding may be performed on part 1 and part 2 as a whole. For example, as shown in FIG. 8, part 2 is concatenated after part 1 for channel coding, or channel coding may be separately performed on part 1 and part 2. Part 1 and part 2 may be sent in a same message, or may be sent in different messages. The CSI report may alternatively have only part 1 or only part 2.

For example, the p groups may include only the $N_g$+1 groups of part 2 of the CSI report. In this case, the CSI report shown in FIG. 8 does not include part 1.

For example, the p groups may include part 1 and part 2 of the CSI report, and part 2 may not be divided into multiple groups. In this case, part 2 of the CSI report shown in FIG. 8 is one group.

The following describes the format of the CSI report when N>1 by using examples. N>1, that is, multiple CSI reports are sent on a same resource.

For example, the p groups may include parts 1 and $N_g$+1 groups of parts 2 that are of the N CSI reports. That is, p=N*($N_g$+2). In a CSI report, a priority of part 1 is higher than a priority of part 2. Priorities of the $N_g$+1 groups of part 2 in descending order are sequentially: group 0, group 1, ..., and group $N_g$.

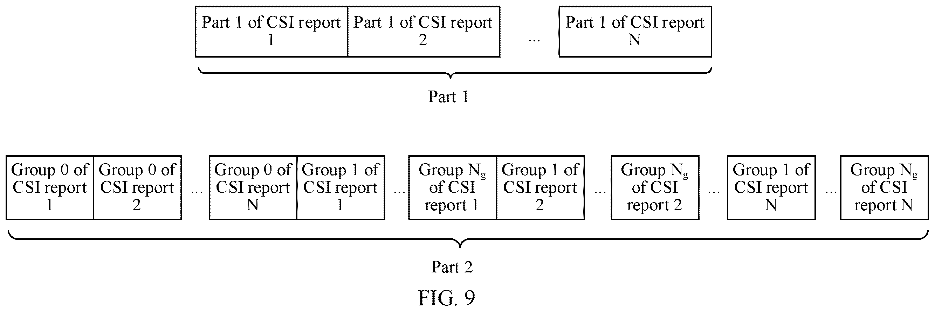

An internal structure of the CSI report is shown in FIG. 9. Parts 1 of the N CSI reports are arranged from front to back in descending order of the priorities of the N CSI reports. Parts 1 of the N CSI reports may be considered as whole part 1. After parts 1 of the N CSI reports, for parts 2 of the N CSI reports, groups 0 of the N CSI reports are arranged from front to back in descending order of the priorities of the N CSI reports. For each CSI report, other groups than group 0 in part 2 of the CSI report are arranged based on priorities of groups in the CSI report, and the other groups of the N CSI reports are arranged based on the priorities of the N CSI reports. Parts 2 of the N CSI reports may be considered as whole part 2.

It should be understood that FIG. 9 is merely an example, and does not constitute any limitation on the solutions in embodiments of this application. For example, a priority of whole part 2 may alternatively be the foregoing priority order of parts 2 of the N CSI reports, or may be another priority order.

Channel coding may be performed on whole part 1 and whole part 2 as a whole. For example, whole part 2 is concatenated after whole part 1 for channel coding, or channel coding may be separately performed on whole part 1 and whole part 2. Whole part 1 and whole part 2 may be sent in a same message, or may be sent in different messages. Channel coding may also be separately performed on part 1 and part 2 of each CSI report.

For example, in the p groups, partial CSI may include only part 1 or part 2. Alternatively, parts 2 of partial CSI may not be divided into multiple groups. In this case, the CSI reports shown in FIG. 9 may be adaptively modified.

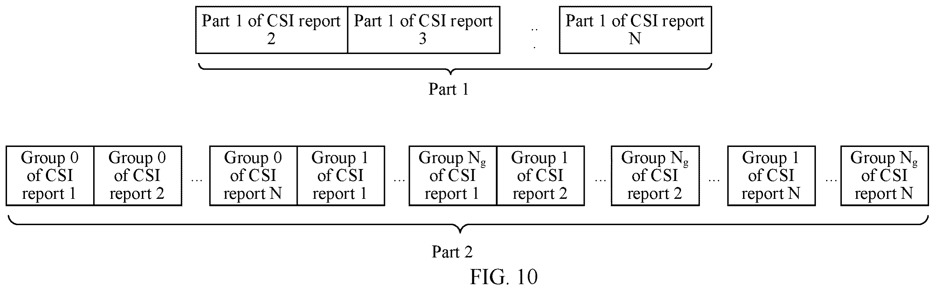

For example, CSI report 1 is considered as a whole as part 2, that is, the p groups do not include part 1 of CSI report 1. An arrangement order of the p groups may be shown in FIG. 10, and only part 1 of CSI report 1 needs to be deleted from FIG. 9.

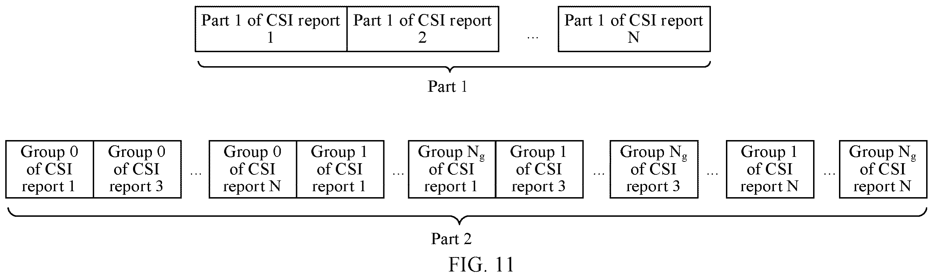

For another example, CSI report 2 is considered as a whole as part 1, that is, the p groups do not include part 2 of CSI report 2. An arrangement order of the p groups may be shown in FIG. 11, and only part 2 of CSI report 2 needs to be deleted from FIG. 9.

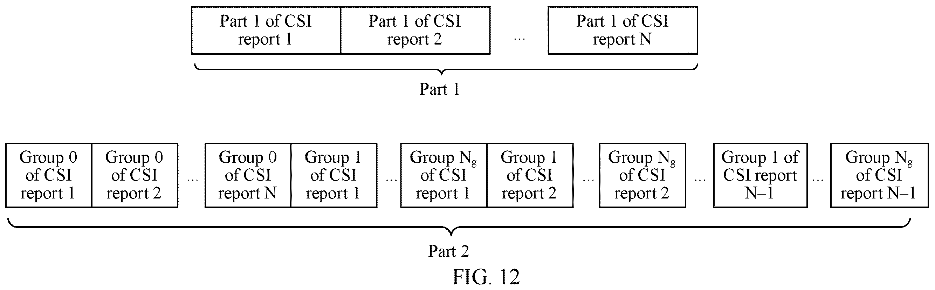

For another example, part 2 of CSI report N is not divided, and is considered as a whole as group 0, that is, the p groups do not include other groups of CSI report N. An arrangement order of the p groups may be shown in FIG. 12, and other groups of part 2 of CSI report N need to be deleted from FIG. 9.

Further, when a size of the p groups does not meet a transmission requirement of the first resource, for example, the size of the p groups is greater than a specified threshold, the p groups are discarded one by one in a back-to-front order until the transmission requirement of the first resource is met, for example, until a size of remaining groups is less than or equal to the specified threshold. The remaining groups are the part of groups whose transmission needs to be performed on the first resource.

It may be understood that the information names in some of the foregoing embodiments are merely examples and do not constitute a limitation on the protection scope of embodiments of this application.

It may be further understood that the formulas used in embodiments of this application are merely examples for description and do not constitute a limitation on the protection scope of embodiments of this application. In a process of calculating the foregoing related parameters, calculation may be performed based on the foregoing formulas, or calculation may be performed based on variations of the foregoing formulas, or calculation may be performed in another manner, to satisfy calculation results of the formulas.

It may be further understood that, some optional features in embodiments of this application may be independent of other features in some scenarios, or may be combined with other features in some scenarios. This is not limited.

It may be further understood that, the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that, in the foregoing method embodiments, methods and operations implemented by a device may alternatively be implemented by a component (for example, a chip or a circuit) of the device.

In correspondence to the method provided in the foregoing method embodiments, an embodiment of this application further provides a corresponding apparatus. The apparatus includes a corresponding module configured to perform the foregoing method embodiments. The module may be software, hardware, or a combination of the software and the hardware. It may be understood that the technical features described in the method embodiments are also applicable to the following apparatus embodiments.

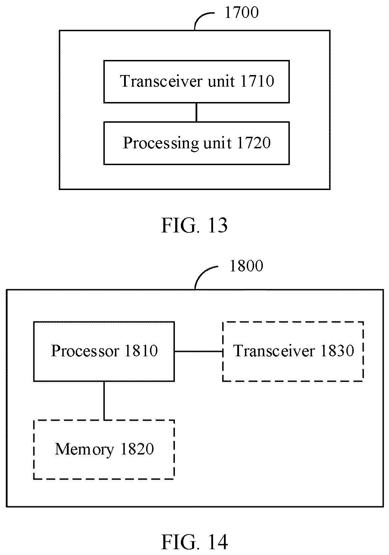

FIG. 13 is a diagram of a communication apparatus 1700 according to an embodiment of this application. The apparatus 1700 includes a transceiver unit 1710 and a processing unit 1720. The transceiver unit 1710 may be configured to implement a corresponding communication function. The transceiver unit 1710 may also be referred to as a communication interface, a communication unit, or the like. The processing unit 1720 may be configured to implement a corresponding processing function, for example, configure a resource. The processing unit 1720 may also be referred to as a processor or the like.

Optionally, the apparatus 1700 further includes a storage unit. The storage unit may be configured to store instructions and/or data. The processing unit 1720 may read the instructions and/or the data in the storage unit, so that the apparatus implements actions of a device or a network element in the foregoing method embodiments.

The apparatus 1700 may be a terminal device, or may be a communication apparatus that is used in a terminal device or used together with a terminal device and that can implement a communication method performed on a terminal device side. Alternatively, the apparatus 1700 may be a network device, or may be a communication apparatus that is used in a network device or used together with a network device and that can implement a communication method performed on a network device side.

When the apparatus 1700 is used in a terminal device, the apparatus 1700 may implement the steps or the processes performed by the terminal device in the foregoing method embodiments. The transceiver unit 1710 may be configured to perform sending/receiving-related operations of the terminal device in the foregoing method embodiments. The processing unit 1720 may be configured to perform processing-related operations of the terminal device in the foregoing method embodiments.

When the apparatus 1700 is used in a network device, the apparatus 1700 may implement the steps or the processes performed by the network device in the foregoing method embodiments. The transceiver unit 1710 may be configured to perform sending/receiving-related operations of the network device in the foregoing method embodiments. The processing unit 1720 may be configured to perform processing-related operations of the network device in the foregoing method embodiments.

It should be understood that a specific process in which the units perform the foregoing corresponding steps is described in detail in the foregoing method embodiments. For brevity, details are not described herein.

It should be further understood that the apparatus 1700 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the apparatus 1700 may be specifically the terminal device in the foregoing embodiments, and may be configured to perform the procedures and/or the steps corresponding to the terminal device in the foregoing method embodiments. Alternatively, the apparatus 1700 may be specifically the network device in the foregoing embodiments, and may be configured to perform the procedures and/or the steps corresponding to the network device in the foregoing method embodiments. To avoid repetition, details are not described herein again.

The apparatus 1700 in the foregoing solutions has functions of implementing corresponding steps performed by a device (for example, the terminal device, or for another example, the network device) in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and a related processing operation in the method embodiments.

In addition, the transceiver unit 1710 may alternatively be a transceiver circuit (for example, may include a receiving circuit and a sending circuit), and the processing unit may be a processing circuit.

It should be noted that the apparatus in FIG. 13 may be the network element or the device in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit integrated on the chip. This is not limited herein.

FIG. 14 is a diagram of another communication apparatus 1800 according to an embodiment of this application. The apparatus 1800 includes a processor 1810. The processor 1810 is configured to execute a computer program or instructions stored in a memory 1820, or read data or signaling stored in the memory 1820, to perform the methods in the foregoing method embodiments. Optionally, there are one or more processors 1810.

Optionally, as shown in FIG. 14, the apparatus 1800 further includes the memory 1820, and the memory 1820 is configured to store the computer program or the instructions and/or the data. The memory 1820 and the processor 1810 may be integrated, or may be disposed separately. Optionally, there are one or more memories 1820.

Optionally, as shown in FIG. 14, the apparatus 1800 further includes a transceiver 1830. The transceiver 1830 is configured to receive a signal and/or send a signal. For example, the processor 1810 is configured to control the transceiver 1830 to receive and/or send the signal.

In a solution, the apparatus 1800 may be used in a terminal device. Specifically, the apparatus 1800 may be a terminal device, or may be an apparatus that can support the terminal device in implementing functions of the terminal device in any one of the foregoing examples. The apparatus 1800 is configured to implement the operations performed by the terminal device in the foregoing method embodiments.

For example, the processor 1810 is configured to execute the computer program or instructions stored in the memory 1820, to implement related operations of the terminal device in the foregoing method embodiments.

In another solution, the apparatus 1800 may be used in a network device. Specifically, the apparatus 1800 may be a network device, or may be an apparatus that can support the network device in implementing functions of the network device in any one of the foregoing examples. The apparatus 1800 is configured to implement the operations performed by the network device in the foregoing method embodiments.

For example, the processor 1810 is configured to execute the computer program or the instructions stored in the memory 1820, to implement related operations of the network device in the foregoing method embodiments.

It should be understood that the processor mentioned in embodiments of this application may be a central processing unit (central processing unit, CPU), or may be another general-purpose processor, a digital signal processor (digital signal processor, DSP), an ASIC, a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes multiple forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

An embodiment of this application further provides a computer-readable storage medium. The computer-readable storage medium stores computer instructions for implementing the methods performed by the communication devices in the foregoing method embodiments.

For example, when the computer program is executed by a computer, the computer is enabled to implement the method performed by the terminal device in the foregoing method embodiments.

For another example, when the computer program is executed by a computer, the computer is enabled to implement the method performed by the network device in the foregoing method embodiments.

An embodiment of this application further provides a computer program product, including instructions. When the instructions are executed by a computer, a method performed by a device (for example, the terminal device or the network device) in the foregoing method embodiments is implemented.

An embodiment of this application further provides a communication system, including the foregoing terminal device and network device. The terminal device and the network device can implement the communication method shown in any one of the foregoing examples.

Optionally, the system further includes a device that communicates with the foregoing terminal device and/or network device.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, a fiber, or a digital subscriber line (DSL)) or wireless (for example, infrared, radio, microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash disk, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   obtaining p groups to be transmitted on a first resource, wherein the p groups belong to N channel state information CSI reports, p is an integer greater than 1, and N is an integer greater than 1; and
   sending a part or all of the p groups on the first resource based on priorities of the p groups, wherein the priorities of the p groups are based on priorities of the N CSI reports, the priority of the CSI report is based on a type of the CSI report, and a type of at least one of the N CSI reports is an artificial intelligence AI-related type.

2. The method according to claim 1, wherein the priority of the CSI report is based on one or more parameters indicative of at least one of the following: a periodicity of the CSI report, a channel on which the CSI report is carried, whether the CSI report comprises a layer 1-reference signal received power L1-RSRP or a layer 1-signal-to-interference-plus-noise ratio L1-SINR, a serving cell to which the CSI report belongs, or an identity ID of the CSI report, at least one of the one or more parameters further indicates the type of the CSI report, and the type of the CSI report comprises the AI-related type or an AI-unrelated type.

3. The method according to claim 1, wherein the priority of the CSI report is based on one or more parameters, at least one of the one or more parameters indicates the type of the CSI report, the type of the CSI report comprises the AI-related type or an AI-unrelated type, and another parameter in the one or more parameters indicates at least one of the following: a periodicity of the CSI report, a channel on which the CSI report is carried, whether the CSI report comprises an L1-RSRP or an L1-SINR, a serving cell to which the CSI report belongs, or an ID of the CSI report.

4. The method according to any one of claims 1 to 3, wherein the AI-related type comprises one or more of a first CSI report type, a second CSI report type, or a third CSI report type; and report content of the first CSI report type comprises channel information obtained through inference by an AI model, report content of the second CSI report type comprises performance information of the AI model, or report content of the third CSI report type comprises channel information for implementing an operation related to the AI model.

5. The method according to claim 4, wherein the N CSI reports comprise a first CSI report, a type of the first CSI report is the first CSI report type, the first CSI report comprises p1 groups in the p groups, priorities of the p1 groups are based on a priority of the first CSI report and priorities of the p1 groups in the first CSI report, and p1 is an integer greater than 1.

6. The method according to claim 5, wherein the channel information obtained through inference by the AI model comprises channel information of multiple layers, the p1 groups each comprise channel information of at least one of the multiple layers, and the priorities of the p1 groups in the first CSI report match priorities of the channel information of the at least one layer in the p1 groups.

7. The method according to claim 5, wherein the channel information obtained through inference by the AI model comprises channel information of multiple segments, the p1 groups each comprise channel information of at least one of the multiple segments, and the priorities of the p1 groups in the first CSI report match priorities of the channel information of the at least one segment in the p1 groups.

8. The method according to claim 7, wherein the priority of the at least one segment is related to a layer at which the at least one segment is located and a location of the at least one segment at the layer at which the at least one segment is located.

9. The method according to any one of claims 4 to 8, wherein the N CSI reports comprise a second CSI report, a type of the second CSI report is the second CSI report type, the second CSI report comprises p2 groups in the p groups, priorities of the p2 groups are based on a priority of the second CSI report and priorities of the p2 groups in the second CSI report, and p2 is an integer greater than 1.

10. The method according to claim 9, wherein the performance information of the AI model comprises overall performance information, performance information of the multiple layers, or performance information of multiple subbands, the p2 groups each comprise at least one piece of performance information in the performance information of the AI model, and the priorities of the p2 groups in the second CSI report match priorities of the at least one piece of performance information in the p2 groups.

11. The method according to claim 10, wherein a priority of the overall performance information is higher than priorities of the performance information of the multiple layers, or the priority of the overall performance information is higher than priorities of the performance information of the multiple subbands.

12. The method according to any one of claims 1 to 11, wherein p=N.

13. The method according to any one of claims 1 to 12, wherein at least two of the N CSI reports have a same priority.

14. The method according to any one of claims 1 to 13, wherein the method further comprises:
receiving first indication information from a network device, wherein the first indication information indicates priorities of a part or all of the N CSI reports.

15. The method according to claim 14, wherein the first indication information is carried in one or more of radio resource control RRC signaling, a medium access control control element MAC CE, or downlink control information DCI.

16. The method according to any one of claims 1 to 15, wherein the sending the part or all of the p groups on the first resource based on the priorities of the p groups comprises: selecting a part of groups from the p groups based on the priorities of the p groups, and sending the part of groups on the first resource.

17. The method according to any one of claims 1 to 15, wherein the sending the part or all of the p groups on the first resource based on the priorities of the p groups comprises: determining locations of the part or all of the p groups on the first resource based on the priorities of the p groups, and sending the part or all of the p groups on the first resource.

18. A communication method, comprising:

obtaining p groups of a CSI report to be transmitted on a first resource, wherein p is an integer greater than 1; and sending a part or all of the p groups on the first resource based on priorities of the p groups in the CSI report, wherein a type of the CSI report is an AI-related type.

19. The method according to claim 18, wherein the AI-related type comprises one or more of a first CSI report type, a second CSI report type, or a third CSI report type; and report content of the first CSI report type comprises channel information obtained through inference by an AI model, report content of the second CSI report type comprises performance information of the AI model, or report content of the third CSI report type comprises channel information for implementing an operation related to the AI model.

20. The method according to claim 19, wherein the type of the CSI report is the first CSI report type, the channel information obtained through inference by the AI model comprises channel information of multiple layers, the p groups each comprise channel information of at least one of the multiple layers, and the priorities of the p groups in the CSI report match priorities of the channel information of the at least one layer in the p groups.

21. The method according to claim 19, wherein the type of the CSI report is the first CSI report type, the channel information obtained through inference by the AI model comprises channel information of multiple segments, the p groups each comprise channel information of at least one of the multiple segments, and the priorities of the p groups in the CSI report match priorities of the channel information of the at least one segment in the p groups.

22. The method according to claim 21, wherein the priority of the at least one segment is related to a layer at which the at least one segment is located and a location of the at least one segment at the layer at which the at least one segment is located.

23. The method according to claim 19, wherein the type of the CSI report is the second CSI report type, the performance information of the AI model comprises overall performance information, performance information of the multiple layers, or performance information of multiple subbands, the p groups each comprise at least one piece of performance information in the performance information of the AI model, and the priorities of the p groups in the CSI report match priorities of the at least one piece of performance information in the p groups.

24. The method according to claim 23, wherein a priority of the overall performance information is higher than priorities of the performance information of the multiple layers, or the priority of the overall performance information is higher than priorities of the performance information of the multiple subbands.

25. A communication method, comprising:

receiving q groups on a first resource, wherein the q groups are a part or all of p groups, the p groups belong to N CSI reports, q is a positive integer, p is an integer greater than 1, N is an integer greater than 1, priorities of the p groups are based on priorities of the N CSI reports, the priority of the CSI report is based on a type of the CSI report, and a type of at least one of the N CSI reports is an AI-related type; and communicating with a terminal device based on the q groups.

26. The method according to claim 25, wherein the priority of the CSI report is based on one or more parameters indicative of at least one of the following: a periodicity of the CSI report, a channel on which the CSI report is carried, whether the CSI report comprises a layer 1-reference signal received power L1-RSRP or a layer 1-signal-to-interference-plus-noise ratio L1-SINR, a serving cell to which the CSI report belongs, or an identity ID of the CSI report, at least one of the one or more parameters further indicates the type of the CSI report, and the type of the CSI report comprises the AI-related type or an AI-unrelated type.

27. The method according to claim 25, wherein the priority of the CSI report is based on one or more parameters, at least one of the one or more parameters indicates the type of the CSI report, the type of the CSI report comprises the AI-related type or an AI-unrelated type, and another parameter in the one or more parameters indicates at least one of the following: a periodicity of the CSI report, a channel on which the CSI report is carried, whether the CSI report comprises an L1-RSRP or an L1-SINR, a serving cell to which the CSI report belongs, or an ID of the CSI report.

28. The method according to any one of claims 25 to 27, wherein the AI-related type comprises one or more of a first CSI report type, a second CSI report type, or a third CSI report type; and report content of the first CSI report type comprises channel information obtained through inference by an AI model, report content of the second CSI report type comprises performance information of the AI model, or report content of the third CSI report type comprises channel information for implementing an operation related to the AI model.

29. The method according to claim 28, wherein the N CSI reports comprise a first CSI report, a type of the first CSI report is the first CSI report type, the first CSI report comprises p1 groups in the p groups, priorities of the p1 groups are based on a priority of the first CSI report and priorities of the p1 groups in the first CSI report, and p1 is an integer greater than 1.

30. The method according to claim 29, wherein the channel information obtained through inference by the AI model comprises channel information of multiple layers, the p1 groups each comprise channel information of at least one of the multiple layers, and the priorities of the p1 groups in the first CSI report match priorities of the channel information of the at least one layer in the p1 groups.

31. The method according to claim 29, wherein the channel information obtained through inference by the AI model comprises channel information of multiple segments, the p1 groups each comprise channel information of at least one of the multiple segments, and the priorities of the p1 groups in the first CSI report match priorities of the channel information of the at least one segment in the p1 groups.

32. The method according to claim 31, wherein the priority of the at least one segment is related to a layer at which the at least one segment is located and a location of the at least one segment at the layer at which the at least one segment is located.

33. The method according to any one of claims 28 to 32, wherein the N CSI reports comprise a second CSI report, a type of the second CSI report is the second CSI report type, the second CSI report comprises p2 groups in the p groups, priorities of the p2 groups are based on a priority of the second CSI report and priorities of the p2 groups in the second CSI report, and p2 is an integer greater than 1.

34. The method according to claim 33, wherein the performance information of the AI model comprises overall performance information, performance information of the multiple layers, or performance information of multiple subbands, the p2 groups each comprise at least one piece of performance information in the performance information of the AI model, and the priorities of the p2 groups in the second CSI report match priorities of the at least one piece of performance information in the p2 groups.

35. The method according to claim 34, wherein a priority of the overall performance information is higher than priorities of the performance information of the multiple layers, or the priority of the overall performance information is higher than priorities of the performance information of the multiple subbands.

36. The method according to any one of claims 25 to 35, wherein p=N.

37. The method according to any one of claims 25 to 36, wherein at least two of the N CSI reports have a same priority.

38. The method according to any one of claims 25 to 37, wherein the method further comprises: sending first indication information indicative of priorities of a part or all of the N CSI reports.

39. A communication method, comprising:

sending first indication information indicative of priorities of a part or all of N CSI reports, wherein N is an integer greater than 1, and a type of at least one of the N CSI reports is an AI-related type; and
receiving a part or all of p groups on a first resource, wherein the part or all of the p groups are based on priorities of the p groups, the p groups belong to the N CSI reports, the priorities of the p groups are based on priorities of the N CSI reports, and p is an integer greater than 1.

40. A communication method, comprising:

receiving first indication information indicative of priorities of a part or all of N CSI reports, wherein N is an integer greater than 1, and a type of at least one of the N CSI reports is an AI-related type; and
sending a part or all of p groups on a first resource, wherein the part or all of the p groups are based on priorities of the p groups, the p groups belong to the N CSI reports, the priorities of the p groups are based on priorities of the N CSI reports, and p is an integer greater than 1.

41. The method according to claim 39 or 40, wherein the first indication information is carried in one or more of RRC signaling, a MAC CE, or DCI.

42. The method according to any one of claims 39 to 41, wherein at least two of the N CSI reports have a same priority.

43. The method according to any one of claims 39 to 42, wherein the priority of the CSI report is based on a type of the CSI report, and the type of the CSI report comprises the AI-related type or an AI-unrelated type.

44. The method according to claim 43, wherein the AI-related type comprises one or more of a first CSI report type, a second CSI report type, or a third CSI report type; and report content of the first CSI report type comprises channel information obtained through inference by an AI model, report content of the second CSI report type comprises performance information of the AI model, or report content of the third CSI report type comprises channel information for implementing an operation related to the AI model.

45. A communication apparatus, comprising units or modules configured to perform the method according to any one of claims 1 to 17, claims 18 to 24, claims 25 to 38, or claims 39 to 44.

46. A computer-readable storage medium, wherein the computer-readable storage medium comprises instructions, and when the instructions are run by a processor, the method according to any one of claims 1 to 17, claims 18 to 24, claims 25 to 38, or claims 39 to 44 is implemented.

47. A communication apparatus, wherein the communication apparatus comprises a processor, the processor is coupled to a storage medium, the storage medium stores instructions, and when the instructions are run by the processor, the method according to any one of claims 1 to 17, claims 18 to 24, claims 25 to 38, or claims 39 to 44 is implemented.

100

Network
device 110

Terminal
device 120

Terminal
device 130

FIG. 1

200

AI network
element 140

Network
device 110

Terminal
device 120

Terminal
device 130

FIG. 2

V $\longrightarrow$ Encoder $\xrightarrow{\quad z \quad}$ Decoder $\longrightarrow$ V'

FIG. 3

Training data $\longrightarrow$ Model training

Data source

Model deployment/ update

Model feedback

Inference data $\longrightarrow$ Model inference

Output $\longrightarrow$ Actor entity

Performance feedback

FIG. 4

500

Terminal device

Network device

510: Obtain p groups to be transmitted on a first resource, where the p groups belong to N CSI reports, p is an integer greater than 1, N is a positive integer, and a type of at least one of the N CSI reports is an AI-related type

520: Send a part or all of the p groups on the first resource based on priorities of the p groups, where the priorities of the p groups are based on priorities of the N CSI reports and/or priorities of the p groups in the N CSI reports

FIG. 5

Layer 1 | Segment 1 | Segment 2 | ... | Segment $N_{sec}$

Layer 2 | Segment 1 | Segment 2 | ... | Segment $N_{sec}$

...

Layer $N_{layer}$ | Segment 1 | Segment 2 | ... | Segment $N_{sec}$

FIG. 6

Layer 1 | Segment 1 | Segment 2 | ... | Segment $N_{sec}$

Layer 2 | Segment 1 | Segment 2 | ... | Segment $N_{sec}$

...

Layer $N_{layer}$ | Segment 1 | Segment 2 | ... | Segment $N_{sec}$

FIG. 7

Part 1 | Group 0 | Group 1 | ... | Group $N_g$

Part 2

FIG. 8

FIG. 9

Part 1 of CSI report 2 | Part 1 of CSI report 3 | .. | Part 1 of CSI report N

Part 1

Group 0 of CSI report 1 | Group 0 of CSI report 2 | ... | Group 0 of CSI report N | Group 1 of CSI report 1 | ... | Group $N_g$ of CSI report 1 | Group 1 of CSI report 2 | ... | Group $N_g$ of CSI report 2 | Group 1 of CSI report N | ... | Group $N_g$ of CSI report N

Part 2

FIG. 10

EP 4 661 310 A1

| Part 1 of CSI report 1 | Part 1 of CSI report 2 | ... | Part 1 of CSI report N |
|---|---|---|---|

Part 1

| Group 0 of CSI report 1 | Group 0 of CSI report 3 | ... | Group 0 of CSI report N | Group 1 of CSI report 1 | ... | Group $N_g$ of CSI report 1 | Group 1 of CSI report 3 | ... | Group $N_g$ of CSI report 3 | Group 1 of CSI report N | ... | Group $N_g$ of CSI report N |
|---|---|---|---|---|---|---|---|---|---|---|---|---|

Part 2

FIG. 11

| Part 1 of CSI report 1 | Part 1 of CSI report 2 | ... | Part 1 of CSI report N |

Part 1

| Group 0 of CSI report 1 | Group 0 of CSI report 2 | ... | Group 0 of CSI report N | Group 1 of CSI report 1 | ... | Group $N_g$ of CSI report 1 | Group 1 of CSI report 2 | ... | Group $N_g$ of CSI report 2 | ... | Group 1 of CSI report N−1 | ... | Group $N_g$ of CSI report N−1 |

Part 2

FIG. 12

1700

```
┌─────────────────────────────────┐
│   ┌─────────────────────────┐   │
│   │ Transceiver unit 1710   │   │
│   └─────────────────────────┘   │
│               │                 │
│   ┌─────────────────────────┐   │
│   │ Processing unit 1720    │   │
│   └─────────────────────────┘   │
└─────────────────────────────────┘
```

FIG. 13

1800

```
┌───────────────────────────────────────────┐
│  ┌─────────────────┐   ┌ ─ ─ ─ ─ ─ ─ ─ ─ ┐ │
│  │                 │   │                   │
│  │ Processor 1810  ├───  Transceiver 1830  │
│  │                 │   │                   │
│  └────────┬────────┘   └ ─ ─ ─ ─ ─ ─ ─ ─ ┘ │
│           │                                 │
│  ┌ ─ ─ ─ ─┴─ ─ ─ ─ ┐                        │
│  │                  │                       │
│  │  Memory 1820     │                       │
│  │                  │                       │
│  └ ─ ─ ─ ─ ─ ─ ─ ─ ┘                        │
└───────────────────────────────────────────┘
```

FIG. 14

## INTERNATIONAL SEARCH REPORT

| | International application No. |
|---|---|
| | **PCT/CN2024/076157** |

**A. CLASSIFICATION OF SUBJECT MATTER**

H04B 7/06(2006.01)i; H04W 24/10(2009.01)i

According to International Patent Classification (IPC) or to both national classification and IPC

**B. FIELDS SEARCHED**

Minimum documentation searched (classification system followed by classification symbols)

IPC: H04B,H04W

Documentation searched other than minimum documentation to the extent that such documents are included in the fields searched

Electronic data base consulted during the international search (name of data base and, where practicable, search terms used)

3GPP, CJFD, CNTXT, DWPI, ENTXT, ENTXTC, VEN, WPABS, WPABSC: CSI报告, 类型, 人工智能, AI, 信道信息, 优先级, channel state information, report, type, priority, machine learning

**C. DOCUMENTS CONSIDERED TO BE RELEVANT**

| Category* | Citation of document, with indication, where appropriate, of the relevant passages | Relevant to claim No. |
|---|---|---|
| Y | CN 110661560 A (ZTE CORP.) 07 January 2020 (2020-01-07)<br>claims 1-27, and description, paragraphs 2-20 and 32-90 | 1-47 |
| Y | WO 2023006096 A1 (HUAWEI TECHNOLOGIES CO., LTD.) 02 February 2023 (2023-02-02)<br>claims 1-20, description, page 1, line 20 to page 4, line 10, and page 13, line 26 to page 23, line 3, and figures 1-17 | 1-47 |
| Y | CN 115334536 A (BEIJING UNISOC COMMUNICATION TECHNOLOGY CO., LTD.) 11 November 2022 (2022-11-11)<br>description, paragraphs 6-35 | 1-47 |
| A | US 2021051508 A1 (LG ELECTRONICS INC.) 18 February 2021 (2021-02-18)<br>entire document | 1-47 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **10 May 2024** | **15 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/076157**

| Patent document cited in search report | | | Publication date (day/month/year) | Patent family member(s) | | | Publication date (day/month/year) |
|---|---|---|---|---|---|---|---|
| CN | 110661560 | A | 07 January 2020 | EP | 3817244 | A1 | 05 May 2021 |
| | | | | US | 2021111776 | A1 | 15 April 2021 |
| | | | | WO | 2020001428 | A1 | 02 January 2020 |
| WO | 2023006096 | A1 | 02 February 2023 | CN | 115694722 | A | 03 February 2023 |
| CN | 115334536 | A | 11 November 2022 | | None | | |
| US | 2021051508 | A1 | 18 February 2021 | WO | 2021029702 | A1 | 18 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310176651